# FASCICULE DE BREVET EUROPEEN

(11) **EP 3 993 906 B1**
(45) Date de publication et mention de la délivrance du brevet: **18.10.2023**
(21) Numéro de dépôt: 20739587.2
(22) Date de dépôt: 03.07.2020
(51) Int. Cl.: B01L 3/00, G01N 21/80, G01N 21/77

(54) **DISPOSITIF MICROFLUIDIQUE COMPORTANT UNE MICROGOUTTE PRÉSENTANT UNE MATRICE SOL-GEL**
MIKROFLUIDISCHE VORRICHTUNG MIT EINEM MIKROTROPFEN MIT EINER SOL-GEL-MATRIX
MICROFLUIDIC DEVICE COMPRISING A MICRODROP HAVING A SOL-GEL MATRIX

(30) Priorité: 05.07.2019 FR 1907513
(43) Date de publication de la demande: 11.05.2022
(73) Titulaire: Commissariat à l'énergie atomique et aux énergies alternatives, 75015 Paris (FR); Ecole Polytechnique, 91120 Palaiseau (FR); Centre National de la Recherche Scientifique, 75794 Paris Cedex 16 (FR)
(72) Inventeur: MUGHERLI, Laurent, 91190 GIF CEDEX (FR); BAROUD, Charles, 91128 PALAISEAU CEDEX (FR); TOMASI, Raphael, 91128 PALAISEAU CEDEX (FR)
(74) Mandataire: Cabinet Nony
(86) Numéro de dépôt international: PCT/EP2020/068855
(87) Numéro de publication internationale: WO 2021/004953

(56) Documents cités:
- WO-A1-2018/060471
- CN-B- 103 084 225
- US-A1- 2010 041 046
- US-A1- 2017 252 744
- EUN JEONG CHO ET AL: "MULTIANALYTE PIN-PRINTED BIOSENSOR ARRAYS BASED ON PROTEIN-DOPED XEROGELS", ANALYTICAL CHEMISTRY, AMERICAN CHEMICAL SOCIETY, US, vol. 74, no. 24, 15 décembre 2002 (2002-12-15), pages 6177-6184, XP001162258, ISSN: 0003-2700, DOI: 10.1021/AC020454+
- A Borta ET AL: "SOLID NANOPOROUS SENSOR FOR THE DETECTION OF PHENOL", Sixth Scientific Meeting EuNetAir (5-7 October 2016), 7 octobre 2016 (2016-10-07), XP055676468, Praha, Czech Republic Extrait de l'Internet: URL:http://www.eunetair.it/cost/meetings/P raga/01-PRESENTATIONS/03_WG1-Session/09_PR AGUE_TD1105_Theron.pdf [extrait le 2020-03-13]
- LAURENT MUGHERLI ET AL: "Quantifying the sol-gel process and detecting toxic gas in an array of anchored microfluidic droplets", LAB ON A CHIP, vol. 20, no. 2, 12 novembre 2019 (2019-11-12), pages 236-243, XP055676472, ISSN: 1473-0197, DOI: 10.1039/C9LC00750D
- MACKENZIE ET AL: "Glasses from melts and glasses from gels, a comparison", JOURNAL OF NON-CRYSTALLINE SOLIDS, NORTH-HOLLAND PHYSICS PUBLISHING. AMSTERDAM, NL, vol. 48, no. 1, 1 March 1982 (1982-03-01), pages 1-10, XP024065115, ISSN: 0022-3093, DOI: 10.1016/0022-3093(82)90241-1 [retrieved on 1982-03-01]
- WANG ZHENG ET AL: "In situ observation of sol-gel transition of agarose aqueous solution by fluorescence measurement", INTERNATIONAL JOURNAL OF BIOLOGICAL MACROMOLECULES, ELSEVIER BV, NL, vol. 112, 6 February 2018 (2018-02-06), pages 803-808, XP085370914, ISSN: 0141-8130, DOI: 10.1016/J.IJBIOMAC.2018.02.020
- Chokkalingam Venkatachalam ET AL: "Optimized droplet-based microfluidics scheme for sol-gel reactions", Lab on a Chip, vol. 10, no. 13, 19 April 2010 (2010-04-19), page 1700, XP093039418, UK ISSN: 1473-0197, DOI: 10.1039/b926976b Retrieved from the Internet: URL:https://pubs.rsc.org/en/content/articl epdf/2010/lc/b926976b>

## Description

La présente invention concerne un dispositif microfluidique comportant une microgoutte présentant une matrice sol-gel piégée dans un piège capillaire du dispositif. Il concerne également un procédé de fabrication d'un tel dispositif. Enfin, l'invention se rapporte à un procédé de détection et/ou de piégeage d'un ou plusieurs analytes et à un procédé d'évaluation d'une matrice sol-gel par un tel dispositif microfluidique.

### Technique antérieure

Il est connu de Chokkalingam V., Weidenhof B., Krämer M., Maier W., Herminghaus S., Seemann R., "Optimized droplet-based microfluidics scheme for sol-gel reactions" (Lab Chip, vol. 10, pages 1700-1705, 19 April 2010) de former des microgouttes de silice microporeuse par un procédé sol-gel à partir de microgouttes de sol formées dans un dispositif microfluidique. La formation du gel et la synérèse se fait en dehors du dispositif microfluidique, dans un tube en téflon puis dans un bécher.

Il est connu de la demande internationale WO 2011/039475 un dispositif microfluidique comportant une zone de piégeage dans laquelle une ou plusieurs microgouttes sont piégées.

Il est également connu des demandes FR 2 952 436, FR3 069 534, FR 3 031 592, WO 2012/080665, FR 3 053 602 et WO 2005/100371 des matériaux sol-gel comportant un capteur moléculaire adapté à un analyte cible particulier.

Il existe un besoin pour un dispositif microfluidique permettant un contrôle précis de la formation d'une matrice sol-gel pour réaliser des analyses faciles, rapides, reproductibles, homogènes, fiables et de faible coût.

### Exposé de l'invention

A cette fin, l'invention propose, selon un premier de ses aspects, un dispositif microfluidique comportant :
- au moins un piège capillaire, et
- au moins une microgoutte comportant une matrice sol-gel, la microgoutte étant piégée dans le piège capillaire.

On désigne par « dispositif microfluidique » un ensemble de microcanaux et/ou de microchambres connectés entre eux dont les sections comportent au moins une dimension mesurée en ligne droite d'un bord à un bord opposé inférieure au millimètre.

Par « piège capillaire », on comprend une zone spatiale du dispositif microfluidique permettant l'immobilisation provisoire ou permanente d'une ou plusieurs microgouttes circulant dans le dispositif microfluidique.

Par « microgoutte », on comprend une goutte ou une bille ayant un volume inférieur ou égal à 1 µL, mieux inférieur ou égal à 50 nL, encore mieux inférieur ou égale à 40 nL.

Par « matrice sol-gel », on comprend une matrice obtenue par un procédé sol-gel. Ce procédé peut notamment être mis en oeuvre en utilisant comme précurseurs des alcoxydes de formule M(OR)ₙ, R'-M(OR)ₙ₋₁ ou encore des silicates de sodium, M étant un métal, un métal de transition ou un métalloïde, notamment le silicium, et R ou R' des groupements alkyles, n étant le degré d'oxydation du métal. En présence d'eau, l'hydrolyse des groupements alkoxy (OR) intervient, formant des petites particules de taille généralement inférieure à 1 nanomètre. Ces particules s'agrègent et forment des amas qui restent en suspension sans précipiter, et forment ce qui est appelé le sol. L'augmentation des amas et leur condensation augmente la viscosité du milieu et forme ce qui est appelé le gel. Le gel peut alors continuer à évoluer pendant une phase de vieillissement dans laquelle le réseau polymérique présent au sein du gel se densifie. Le gel se rétracte ensuite en évacuant le solvant en dehors du réseau polymérique formé, lors d'une étape appelée la synérèse. Puis le solvant s'évapore, lors d'une étape dite de séchage, ce qui conduit à un matériau solide de type verre poreux. Les étapes de synérèse et de séchage peuvent être concomitante.

La matrice sol-gel de la microgoutte peut être à l'état de gel ou de solide après l'étape de synérèse et/ou de séchage du procédé sol-gel, notamment la matrice sol-gel est un solide poreux, par exemple un xérogel. De préférence, la matrice sol-gel présente un état avant, pendant ou après l'étape de synérèse et avant, pendant ou après l'étape de séchage selon l'état d'avancement du procédé sol-gel dans le dispositif microfluidique. De préférence, la matrice sol-gel de la ou de chaque microgoutte est à l'état de solide après l'étape de synérèse et de séchage dans le dispositif microfluidique, notamment poreux, par exemple un xérogel.

De préférence, la microgoutte présente une structure définie par la matrice sol-gel. La microgoutte peut donc avoir les propriétés d'un gel, ou bien d'un solide, de préférence poreux, par exemple un xérogel.

Un tel dispositif microfluidique permet d'avoir une microgoutte immobilisée dans le piège capillaire, ce qui peut permettre un contrôle précis du vieillissement et/ou de la synérèse et du séchage de la matrice sol-gel sur de petits échantillons facilement contrôlables. Ceci permet une étude précise des procédés sol-gel mis en oeuvre.

D'autre part, en dopant préalablement la microgoutte avec un ou plusieurs capteurs moléculaires, la détection d'un ou plusieurs analytes en phase gazeuse ou liquide par la microgoutte est possible. Ceci permet une détection directe, rapide, de faible encombrement et ne nécessitant que peu de matériau sol-gel et de capteurs moléculaires.

De préférence, le dispositif microfluidique comporte une pluralité de pièges capillaires espacés les uns des autres et une pluralité de microgouttes comportant chacune une matrice sol-gel, les microgouttes étant chacune piégée dans un des pièges capillaires. Le nombre de pièges capillaires peut être supérieur ou égal à 10, mieux supérieur ou égal à 100, de préférence compris entre 100 et 1000. De préférence, les pièges capillaires sont espacés les uns des autres. De préférence, les pièges capillaires sont agencés dans le dispositif microfluidique selon une matrice. De préférence, les pièges capillaires sont tous espacés entre eux d'une même distance constante. Le fait d'avoir une matrice de pièges capillaires recevant chacun une ou plusieurs microgouttes permet de réaliser des études ou mesures avec une grande quantité de données sur un faible volume. Il est alors possible de mettre en place des observations ou mesures statistiques pour limiter les problèmes de reproductibilité et/ou d'homogénéité et/ou un multiplexage des observations ou mesures sur des microgouttes différentes de manière rapide, aisé pour l'utilisateur et sur des faibles volumes. Un tel dispositif permet des observations ou mesures rapides, reproductibles, homogènes, fiables et de faibles coûts.

De préférence, le dispositif microfluidique comporte un canal présentant une chambre de piégeage, la chambre de piégeage comportant le ou les pièges capillaires. De préférence, la chambre de piégeage est délimitée par quatre parois latérales, une paroi supérieure et une paroi inférieure, le ou les pièges capillaires s'étendant sur la paroi supérieure et/ou la paroi inférieure de la chambre de piégeage.

De préférence, le dispositif microfluidique comporte au moins un canal d'entrée et au moins un canal de sortie des fluides dans le dispositif microfluidique, notamment la chambre de piégeage. Le dispositif microfluidique, notamment la chambre de piégeage, est de préférence fermé au liquide à l'exception du canal d'entrée et du canal de sortie. De préférence, le canal d'entrée débouche d'un premier côté de la chambre de piégeage relativement au(x) piège(s) capillaire(s) et le canal de sortie s'étend d'un deuxième côté de la chambre de piégeage opposé au premier côté relativement au(x) piège(s) capillaire(s). De tels canaux permettent de contrôler précisément la circulation des fluides dans le dispositif microfluidique, notamment d'amener un fluide en contact de la ou des microgouttes piégées dans le ou les pièges capillaires en le faisant circuler du canal d'entrée au canal de sortie.

La chambre de piégeage peut comporter une marche du premier ou du deuxième côté de la chambre de piégeage présentant une hauteur, mesurée entre les parois supérieure et inférieure, supérieure à celle du reste de la chambre de piégeage, piège(s) capillaire(s) exclu(s). Une telle marche permet la formation d'un front de liquide d'un côté du ou des pièges capillaires afin notamment de pouvoir exposer ces derniers à un gradient de gaz issu du front de liquide par vaporisation de ce dernier ou d'un des composés qu'il contient.

Le dispositif microfluidique, notamment la chambre de piégeage, peut comporter au moins une paroi en un matériau poreux, notamment en PDMS, au moins partiellement perméable aux gaz. Une telle paroi poreuse permet l'évaporation du solvant lors de l'étape de synérèse. La vitesse de l'étape de synérèse et/ou de l'étape de séchage peut être contrôlée par la porosité du matériau poreux et/ou en en contrôlant un flux de gaz entre le canal d'entrée et le canal de sortie.

En variante, le dispositif microfluidique est constitué d'un ou de matériaux non poreux, notamment en verre ou en un matériau thermoplastique, par exemple en un polymère d'oléfine cyclique (COP), en un copolymère d'oléfine cyclique (COC), en polycarbonate ou en un plastique moulé. Dans ce cas, l'étape de synérèse et/ou de séchage peut se faire en soumettant la microgoutte à un flux de fluide entre le canal d'entrée et le canal de sortie. Le contrôle de la vitesse du flux de fluide permet un contrôle précis de la synérèse et/ou du séchage.

De préférence, le ou les pièges capillaires forment chacun une cavité dans une paroi du dispositif microfluidique, notamment de la chambre de piégeage.

De préférence, la hauteur de la cavité, correspondant à la distance entre le fond de la cavité et la paroi opposée du dispositif microfluidique, est supérieure ou égale à deux fois la hauteur du dispositif microfluidique en bordure du piège capillaire, correspondant à la distance entre la paroi dans laquelle la cavité est formée et la paroi opposée en bordure du piège capillaire.

De préférence, la plus petite largeur de la cavité est supérieure ou égale à deux fois la hauteur du dispositif microfluidique en bordure du ou des pièges capillaires.

De préférence, la hauteur du dispositif microfluidique en bordure du ou des pièges capillaires est inférieure ou égale à la plus petite dimension de la ou de chaque microgoutte piégée comportant une matrice sol-gel, notamment à la plus petite dimension de la ou de chaque microgoutte piégée après la synérèse. De la sorte, la ou chaque microgoutte ne peut pas sortir du piège capillaire sans qu'il y ait destruction du dispositif microfluidique. Ceci permet d'avoir un une localisation précise des microgouttes en permanence, ce qui facilite leurs observations à tout moment.

De telles dimensions de la cavité permettent également de former la ou les microgouttes directement dans le ou les pièges capillaires par cassure d'un liquide formant le sol ou une partie du sol comme cela est détaillé par la suite en relation avec le procédé de fabrication du dispositif microfluidique.

Au moins un piège capillaire peut comporter une première zone de piégeage dans laquelle la ou une des microgouttes comportant une matrice sol-gel est piégée et au moins une deuxième zone de piégeage présentant une force de piégeage d'une microgoutte donnée différente de celle de la première zone de piégeage pour piéger une microgoutte différente. De tels pièges capillaires sont notamment décrits dans la demande internationale WO 2018/060471.

Au moins un piège capillaire peut présenter une unique zone de piégeage configurée pour piéger une unique microgoutte, la microgoutte comportant une matrice sol-gel, ou une pluralité de microgouttes, au moins une des microgouttes comportant une matrice sol-gel.

De préférence, la ou les matrices sol-gel sont obtenues par une procédé sol-gel hydrolytique.

De préférence, la ou les matrices sol-gel sont obtenues à partir de précurseurs choisis parmi les alcoxydes, notamment les alcoxydes de zirconium, notamment le butoxyde de zirconium (TBOZ), le propoxide de zirconium (TPOZ) les alcoxydes de titane, de niobium, de vanadium, d'yttrium, de cérium, d'aluminium ou de silicium, notamment le tétraméthoxysilanes (TMOS), le tétraéthoxysilane (TEOS), le tétrapropoxysilane (TPOS), le tétrabutoxysilane (TBOS), les triméthoxysilane, notamment le méthyltriméthoxysilane (MTMOS), le propyltriméthoxysilane (PTMOS,) et l'éthyltriméthoxysilane (ETMOS), les triéthoxysilane, notamment le méthyltriéthoxysilane (MTEOS), l'éthyltriéthoxysilane (ETEOS), le propyltriéthoxysilane (PTEOS), l'aminopropyltriethoxysilane (APTES) et leurs mélanges.

La ou les microgouttes peuvent comporter un solvant, notamment un solvant choisi parmi l'eau, le méthanol, l'éthanol, le propanol, le butanol, le 2-méthoxyéthanol, l'acétone, le DMSO, le DMF, le NMF, le formamide, la méthyléthylcétone, le chloroforme, le dichlorométhane, l'acide acétique et leurs mélanges, de préférence un mélange d'eau et de butanol.

La ou les microgouttes peuvent comporter d'autres additifs, notamment un ou plusieurscatalyseurs, notamment choisi parmi l'acide acétique, l'acide nitrique, l'acide sulfurique, l'acide fluorhydrique et l'hydroxyde d'ammonium, et/ou un ou plusieurs stabilisants, notamment choisi parmi l'acide acétique, acetylacetone, les glycols, le methoxyethanol, les glycols et les beta-cétoesters.

La ou les microgouttes peuvent être translucides, de préférence transparentes.

Le dispositif peut comporter une unique microgoutte comportant une matrice sol-gel dans le ou chaque piège capillaire.

En variante, le dispositif comporte une pluralité de microgouttes comportant une matrice sol-gel dans le ou chaque piège capillaire. Les microgouttes comportant une matrice sol-gel peuvent être agencées dans le piège capillaire en colonne.

De préférence, le dispositif comporte une pluralité de microgouttes comportant une matrice sol-gel piégées dans le ou les pièges capillaires du dispositif microfluidique.

Les microgouttes peuvent être sensiblement identiques, notamment de compositions sensiblement identiques. Ceci permet notamment, dans le cas d'un dispositif microfluidique présentant plusieurs pièges capillaires, d'effectuer des études statistiques avec un seul dispositif microfluidique. Ceci limite les problèmes de reproductibilité et/ou d'homogénéité ainsi que les effets de bords.

En variante, au moins certaines microgouttes sont différentes, notamment de compositions ou structures différentes. Ceci permet notamment, dans le cas d'un dispositif microfluidique présentant plusieurs pièges capillaires, de faire du multiplexage avec un seul dispositif microfluidique sur de faibles volumes.

Les microgouttes peuvent toutes comporter un même matériau sol-gel composant la matrice sol-gel. Ceci peut permettre de faire des études sur un matériau sol-gel particulier.

Les microgouttes peuvent comporter des matrices sol-gel de compositions identiques. Ceci peut permettre de faire des études statistiques sur la structure de la matrice sol-gel ou de former les microgouttes facilement à partir d'une même solution initiale dans les mêmes conditions.

En variante, au moins deux microgouttes comportent des matrices sol-gel différentes, notamment de structures ou de compositions différentes. Ceci peut permettre d'étudier sur un même dispositif microfluidique des matrices sol-gel différentes et de faire un multiplexage des matrices sol-gel.

La ou les microgouttes comportant une matrice sol-gel peuvent chacune comporter un ou plusieurs capteurs moléculaires. Chaque capteur moléculaire comporte de préférence un ou plusieurs ensembles de détection identiques capable chacun de réagir en présence d'un analyte cible pour induire une modification observable et comprenant une ou plusieurs molécules. Les capteurs moléculaires sont de préférence incorporés à la matrice sol-gel pour détecter dans chacun des pièges capillaires correspondant la présence d'un ou de plusieurs analytes cibles particuliers. De préférence, le ou les capteurs moléculaires sont répartis au sein de la matrice sol-gel dans chaque microgoutte. De préférence, le ou chaque capteur moléculaire est configuré pour avoir une propriété optique, notamment une couleur, une absorbance, une réflectance, une fluorescence ou une luminescence, qui est différente en présence de l'analyte cible, notamment par réaction ou liaison avec ce dernier. Il est alors possible avec le dispositif microfluidique d'analyser la présence d'un ou plusieurs analytes cibles dans un fluide, liquide ou gazeux, en le mettant en contact avec les microgouttes dans le système microfluidique. Il est également possible de capturer les analytes cibles du fluide à tester à l'aide des capteurs moléculaire dans le cas où une liaison avec l'analyte cible se forme. Le fait que la détection se fasse par un changement de propriété optique rend facile et directe la détection visuelle ou par un dispositif optique simple.

La ou les microgouttes peuvent comporter au moins deux capteurs moléculaires permettant la détection d'analytes cibles différents.

Au moins une microgoutte peut comporter au moins deux capteurs moléculaires configurés pour détecter la présence d'analytes cibles différents, les capteurs moléculaires présentant de préférence des propriétés optiques différentes l'un de l'autre en présence des analytes cibles correspondants. De préférence, les capteurs moléculaires présentent des réactions avec leurs analytes cibles correspondants indépendantes l'une de l'autre. Ceci permet de détecter de manière simple des analytes différents en parallèle dans la même microgoutte. Par exemple, la couleur de chaque microgoutte permet de déterminer les concentrations relatives des analytes cibles entre eux et la concentration en chacun des analytes.

De préférence, au moins deux microgouttes comportent des capteurs moléculaires pour détecter des analytes cibles différents. Ceci permet la détection en parallèles d'analytes cibles par des microgouttes différentes, notamment dans le cas de capteurs moléculaires présentant une réponse à la présence de l'analyte cible correspondant similaire. Un tel dispositif est facile à mettre en oeuvre et permet une analyse simple et immédiate de la présente ou non des analytes cibles différents

Au moins deux microgouttes peuvent comporter des capteurs moléculaires présentant un même ensemble de détection en des concentrations différentes. De préférence, plusieurs microgouttes peuvent comporter des capteurs moléculaires présentant un même ensemble de détection en des concentrations différentes deux à deux. Les microgouttes peuvent être agencés dans une pluralité de pièges capillaires ou dans un même piège capillaire, pour former un gradient de concentration en l'ensemble de détection entre le canal d'entrée et le canal de sortie.

Le ou les capteurs moléculaires peuvent comporter un ensemble de détection choisi parmi le 4-amino-3-penten-2-one, p-diméthylaminobenzaldéhyde, le p-diméthylaminocinnamaldéhyde, le p-méthoxybenzaldéhyde, le 4-méthoxy-naphtaldéhyde, l'acide croconique, le p-diazobenzènesulfonique, la 4-aminoantipyrine, l'indigo carminé, un composé quinoïque, un mélange d' iodure et d'un composé choisi parmi l'amidon, l'amylose, l'amylopectine, le xyloglucane, le xylane, le chitosane, le glycogène, l'alcool polyvinylique ou un composé de l'alcool polyvinylique, la cellulose ou un composé de la cellulose, α-cyclodextrine, la théobromine ou les polymères blocs d'oxydes de polypropylène et de polyéthylène, un mélange comportant un phénol et du nitroprussiate de sodium et le composé tel que décrit dans la demande WO 2005/100371. Le ou les capteurs moléculaires peuvent comporter un ou plusieurs additifs, notamment choisis parmi les solvants, les acides et les bases, les oxydants et les réducteurs pour favoriser les réactions avec les analytes cibles, et/ou une ou plusieurs molécules additionnelles permettant, seules ou combinées à d'autres, une interaction plus ou moins sélective avec l'analyte cible, et/ou une fonction chimique particulière, notamment apportant une coloration particulière, réagissant par un changement de couleur au pH, apportant une fluorescence particulière.

De préférence, le ou les capteurs moléculaires consiste en le ou les ensembles de détection identiques et optionnellement en un ou plusieurs additifs. Le ou les capteurs moléculaires peuvent permettre de détecter chacun un analyte cible choisi parmi les composés organiques volatiles, notamment ceux définis sur les listes de polluants prioritaires de l'ANSES (Agence Nationale de Sécurité Sanitaire de l'alimentation de l'environnement et du travail), notamment les aldéhydes, tels que le formaldéhyde, l'acétaldéhyde ou l'hexaldehyde, le monoxyde et/ou le dioxyde de carbone, le dioxygène, l'hydrogène, le phénol et ses dérivés, les composés indoliques, notamment l'indole, le scatole ou le tryptophane, les chloramines, le dioxyde d'azote, l'ozone, les composés halogénés, notamment le trifluorure de bore, ses dérivés et le trichlorure de bore, les hydrocarbure aromatiques, tels que le naphtalène, le benzène et le toluène et non aromatiques, tels que le pentane, l'hexane et l'heptane, l'acroléine, le dioxyde d'azote et l'ethylbenzene.

De préférence, le dispositif microfluidique comporte une pluralité de pièges capillaires espacés les uns des autres, comportant chacun une microgoutte comportant une matrice sol-gel, notamment en un matériau solide après synérèse, et un ou plusieurs capteurs moléculaires dans chaque matrice sol-gel. Dans le cas où la matrice sol-gel est une matrice solide obtenue après synérèse, le dispositif microfluidique en l'état est particulièrement stable. Il peut donc être préparé en amont de son utilisation, par exemple en laboratoire, puis stocké, et être utilisé ultérieurement, notamment directement sur le terrain.

La ou plusieurs microgouttes peuvent comporter des microbilles observables, notamment fluorescentes, dans la matrice sol-gel. De telles microbilles peuvent permettre d'évaluer le temps de gel durant la formation de la matrice sol-gel.

Le dispositif peut comporter un système de contrôle de la température du dispositif microfluidique permettant de refroidir ou chauffer le dispositif microfluidique notamment pour contrôler la formation de la matrice sol-gel par le procédé sol-gel.

De préférence, le dispositif comporte un système de circulation, notamment du canal d'entrée vers le canal de sortie, des fluides dans le dispositif microfluidique, notamment une pompe, un pousse seringue, un différentiel de pression.

L'invention a également pour objet, selon un deuxième de ses aspects, un procédé de fabrication d'un dispositif microfluidique, notamment du dispositif microfluidique tel que décrit précédemment, le procédé comportant le piégeage d'au moins une microgoutte comportant un sol dans un piège capillaire du dispositif microfluidique et la formation d'une matrice sol gel dans la microgoutte piégée à partir du sol par un procédé sol-gel.

Un tel procédé permet la formation d'une microgoutte contenant une matrice sol-gel directement dans le piège capillaire précisément localisé dans le dispositif microfluidique. Le fait que la matrice sol-gel se forme dans le piège capillaire permet un contrôle précis et reproductible de sa formation. De plus, les faibles volumes mis en jeu facilitent l'homogénéité et la rapidité de la formation.

Le fait que la microgoutte soit piégée dans un piège capillaire permet également une connaissance précise de sa localisation dans le dispositif microfluidique, facilitant son analyse ou son utilisation dans un but de détection notamment d'analytes cibles lorsqu'elle comporte un ou plusieurs capteurs moléculaires.

De préférence, le procédé comporte le piégeage d'une pluralité de microgouttes comportant un sol dans un ou plusieurs pièges capillaires du dispositif microfluidique, notamment de la chambre de piégeage et la formation d'une matrice sol-gel dans chaque microgoutte à partir du sol par un procédé sol-gel.

De préférence, le procédé comporte le piégeage d'au moins une microgoutte, notamment d'une unique microgoutte, comportant un sol dans chaque piège capillaire d'une puce microfluidique comportant une pluralité de pièges capillaires espacés les uns des autres et la formation d'une matrice sol gel dans chaque microgoutte à partir du sol par un procédé sol-gel. Le fait de piéger une ou plusieurs microgouttes dans plusieurs pièges capillaires permet de former une matrice de microgouttes localisées spatialement dans le dispositif microfluidique permettant d'effectuer des analyses statistiques et/ou un multiplexage selon la composition des microgouttes.

En variante, le procédé comporte le piégeage d'une pluralité de microgouttes comportant une matrice sol-gel dans un piège capillaire du dispositif microfluidique, le dispositif comportant un ou plusieurs pièges capillaires pouvant piéger une pluralité de microgoutte, et la formation d'une matrice sol gel dans chaque microgoutte à partir du sol par un procédé sol-gel. Dans ce cas, le piège capillaire peut par exemple contenir des microgouttes agencées en colonne et comportant un sol.

De préférence, le procédé comporte l'ajout d'un ou plusieurs capteurs moléculaires et/ou de microbilles observables dans la ou les microgouttes avant ou après formation de la matrice sol-gel, de préférence avant l'étape de synérèse, chaque capteur moléculaire permettant la détection d'au moins un analyte cible. Le ou les capteurs moléculaires peuvent être tels que décrit précédemment en relation avec le dispositif microfluidique.

L'ajout d'un ou de plusieurs capteurs moléculaires et/ou de microbilles observables peut avoir lieu dans la ou les microgouttes comportant un sol après le piégeage de la ou des microgouttes comportant un sol. Le procédé peut comporter l'ajout de microgouttes additionnelles comportant le ou les capteurs moléculaires et/ou les microbilles observables dans le dispositif microfluidique, le piégeage d'une ou de plusieurs microgouttes additionnelles dans la ou chaque piège capillaire et la coalescence de la ou des microgouttes additionnelles et de la microgoutte comportant le sol ou la matrice sol-gel. Dans ce cas, chaque piège capillaire piège, de préférence, une seule microgoutte comportant un sol durant le piégeage. L'ajout d'une ou plusieurs microgouttes peut se faire selon le procédé décrit dans la demande FR 3 056 927 à l'aide d'un piège capillaire comportant différentes zones de piégeage présentant des forces de piégeage différentes.

En variante, l'ajout de capteurs moléculaires et/ou de microbilles observables dans le sol peut avoir lieu préalablement au piégeage des microgouttes, notamment lors d'une étape préalable de formation des microgouttes ou directement dans le sol avant la formation des microgouttes.

Le piégeage d'une ou des microgouttes comportant chacune un sol dans le ou les pièges capillaires peut comporter :
(i) le piégeage d'une première microgoutte comportant une partie du sol dans le ou chaque piège capillaire,
(ii) n ajouts successifs d'une ou plusieurs microgouttes complémentaires comportant une autre partie du sol dans le dispositif microfluidique, notamment de l'eau, pour le ou les piéger dans le ou chaque piège capillaire, n étant un entier de préférence compris entre 1 et 10, et la coalescence de la première microgoutte et de la ou des microgouttes complémentaires dans chaque piège capillaire pour obtenir le sol, la coalescence ayant lieu après chaque ajout successif ou après l'ensemble des ajouts successifs,
(iii) optionnellement l'ajout de microgouttes additionnelles comportant un ou plusieurs capteurs moléculaires et/ou des microbilles observables dans le dispositif microfluidique, leur piégeage dans le ou les pièges capillaires et la coalescence des microgouttes additionnelles et de microgoutte dans le ou chaque piège capillaire, l'étape (iii) ayant lieu avant ou après l'étape (ii).

La coalescence des microgouttes additionnelles peut avoir lieu en même temps que la coalescence des microgouttes complémentaires. Les microgouttes additionnelles peuvent être identiques ou non.

De préférence, le piégeage d'une ou des microgouttes comportant chacune un sol dans le ou les pièges capillaires peut comporter :
(i) le piégeage d'une première microgoutte comportant une partie du sol dans le ou chaque piège capillaire,
(ii) optionnellement l'ajout de microgouttes additionnelles comportant un ou de plusieurs capteurs moléculaires et/ou des microbilles dans le dispositif microfluidique, leur piégeage dans le ou les pièges capillaires et la coalescence des microgouttes additionnelles et des premières microgouttes dans le ou chaque piège capillaire pour former des premières microgouttes dopées,
(iii) l'ajout d'une ou plusieurs microgouttes complémentaires comportant le reste du sol dans le dispositif microfluidique, notamment de l'eau, pour le ou les piéger dans le ou chaque piège capillaire et
(iv) la coalescence de la première microgoutte dopée ou non et de la ou des microgouttes complémentaires dans chaque piège capillaire pour obtenir le sol.

De préférence, le piégeage de la ou des microgouttes comportant un sol se fait dans un fluide porteur entourant la ou chaque microgoutte.

Le procédé peut comporter une étape préalable de formation de la ou des microgouttes comportant le sol ou de la ou des premières microgouttes comportant une partie du sol avant l'étape de piégeage dans les pièges capillaires. Les microgouttes peuvent être formées dans un système annexe de formation des microgouttes, notamment un autre dispositif microfluidique ou directement dans le dispositif microfluidique en amont des pièges capillaires, notamment en entrée de la chambre de piégeage. Les microgouttes sont de préférence formées et mélangées dans un fluide porteur non miscible avec le sol et sont entraînées en circulation par le fluide porteur dans le dispositif microfluidique pour être piégée dans le ou les pièges capillaires. La formation des microgouttes préalablement à leur piégeage permet le piégeage d'une pluralité de microgouttes par pièges capillaires le cas échéant et/ou le piégeage d'un panel de microgouttes qui ne sont pas toutes identiques, notamment en terme de composition.

En variante, le piégeage de la ou des microgouttes comportant le sol ou de la ou des premières microgouttes comportant une partie du sol comporte:
- le remplissage du dispositif microfluidique d'une première solution comportant le sol ou la partie de sol et optionnellement un ou plusieurs capteurs moléculaires et/ou une ou plusieurs microbilles dans le sol,
- l'injection d'une deuxième solution d'un fluide porteur non miscible avec le sol en amont du ou des pièges capillaires pour pousser la première solution vers une sortie du dispositif microfluidique en aval du ou des pièges capillaires, le dispositif microfluidique étant conformé pour permettre la formation d'une microgoutte de la première solution au niveau du ou de chaque piège capillaire lors de l'injection de la deuxième solution dans le dispositif microfluidique. Par ce procédé de piégeage, les microgouttes sont formées directement dans les pièges capillaires et sont piégées dans ces derniers dès leur formation. Ceci permet de s'affranchir de la manipulation des microgouttes préalable à leur piégeage et des contraintes liées à la formation des microgouttes préalable au piégeage. Ceci permet également de former l'ensemble des microgouttes simultanément, ce qui limite le risque de formation du gel dans la ou les microgouttes hors du piège capillaire. Dans ce procédé de piégeage, une seule microgoutte est formée dans chaque piège capillaire et les microgouttes formées sont toutes de composition identique car formées à partir d'une même première solution.

Au moins deux microgouttes piégées dans un ou deux pièges capillaires différents, de préférence dans deux pièges différents, peuvent être différentes, notamment comporter un sol différent, notamment par sa nature et/ou sa concentration en au moins un composé du sol ou comporter des capteurs moléculaires différents, notamment en terme de concentration de l'ensemble de détection ou de nature de l'ensemble de détection. Cette différence peut être obtenue par :
- le piégeage de microgouttes comportant le sol ou de première microgoutte comportant une partie du sol différentes, et/ou
- le piégeage de microgouttes additionnelles différentes, notamment de concentration en un ou plusieurs capteurs moléculaires différentes ou de capteurs moléculaires différents ou de quantité de microbilles différentes, et/ou
- le piégeage d'un nombre différents de microgouttes additionnelles identiques ou non dans les pièges capillaires, et/ou
- la formation dans les pièges capillaires de première microgouttes comportant une partie du sol dans les pièges capillaires identiques et l'ajout de microgouttes complémentaires de compositions différentes ou en quantités différentes dans les pièges capillaires contenant les première microgouttes.
Le fait d'avoir des microgouttes différentes dans des pièges capillaires différents permet un multiplexage du dispositif microfluidique. Il est alors possible d'étudier sur un même dispositif microfluidique l'évolution de sols différents ou de détecter des analytes cibles différents.

Au moins deux microgouttes piégées dans un ou deux pièges capillaires différents, de préférence dans deux pièges différents, peuvent comporter un sol identique. Il est alors possible d'étudier de manière statistique sur une même puce microfluidique l'évolution du sol, notamment son temps de gel ou son diamètre.

Le dispositif microfluidique peut comporter plusieurs pièges capillaires piégeant chacun une microgoutte comportant un sol, les microgouttes étant issues d'un panel de microgouttes présentant des groupes de microgouttes dans lequel les microgouttes sont identiques, les groupes de microgouttes comportant des sols différents les uns des autres.

En variante, le dispositif microfluidique comporte plusieurs pièges capillaires piégeant chacun une microgoutte comportant un sol, les microgouttes étant issues d'un panel de microgouttes identiques.

De préférence, le pourcentage volumique en alcool du sol est inférieur ou égal à 80%. De préférence, le pourcentage volumique en alcool du sol est supérieur ou égal à 20%.

De préférence, les propriétés physiques de la ou des microgouttes, du fluide porteur et des parois du dispositif microfluidique, les viscosités de la ou des microgouttes et du fluide porteur et le mode de fonctionnement du dispositif, notamment les vitesses de circulation de la ou des microgouttes et du fluide porteur dans le dispositif microfluidique, sont choisies de sorte que la ou les microgouttes comportant un sol soient espacées des parois du dispositif microfluidique, notamment séparées de ces dernières par une couche du fluide porteur. De préférence, le fluide porteur entoure totalement la ou chaque microgoutte. De préférence, le fluide porteur est plus mouillant avec les parois du dispositif microfluidique que le sol de la ou de chaque microgoutte.

De préférence, le temps de gel du sol est supérieur ou égal à 5 min, mieux supérieur ou égal à 10 min.

Le procédé peut comporter la circulation d'un fluide entre le canal d'entrée et le canal de sortie durant le piégeage de la ou des microgouttes comportant un sol et/ou la formation de la matrice sol-gel. Une telle circulation de fluide permet de mettre en mouvement le contenu de la ou des microgouttes piégées afin d'homogénéiser le contenu de cette ou ces dernières. Ceci est particulièrement utile lorsque les microgouttes de sol sont formées par adjonction d'une ou plusieurs microgouttes complémentaires et/ou additionnelles et/ou durant la formation de la matrice sol-gel. Cela peut également permettre de mettre en mouvement des microbilles dans le sol de sorte à pouvoir évaluer la formation du gel.

Le procédé peut comporter le contrôle de la température du dispositif microfluidique, notamment une baisse de la température du dispositif microfluidique durant le piégeage des microgouttes et une augmentation de la température du dispositif microfluidique durant la formation de la matrice sol-gel. De préférence, la température du dispositif microfluidique durant le piégeage est comprise entre 0 et 30°C, mieux entre 5 et 15 °C. De préférence, la température du dispositif microfluidique durant la formation de la matrice sol-gel est comprise entre 20 et 80°C, mieux entre 20 et 60°C, encore mieux entre 30 et 50°C. Le fait de contrôler la température du dispositif durant le procédé permet de contrôler précisément la formation de la matrice sol-gel et d'avoir un dispositif reproductible. Le fait de baisser la température durant le piégeage permet d'augmenter le temps de gel et d'éviter la formation de la matrice sol-gel hors des pièges capillaires, ce qui pourrait bloquer le dispositif microfluidique. Le fait d'augmenter la température lors de la formation de la matrice sol-gel permet de contrôler notamment en accélérant la formation du gel, l'étape de synérèse et/ou de séchage.

De préférence, le procédé comporte une étape additionnelle de séchage de la matrice microfluidique par évaporation du solvant contenu dans la microgoutte. Le séchage peut comporter l'évaporation du solvant au travers d'une surface poreuse au gaz du dispositif microfluidique et/ou la circulation d'un fluide dans le dispositif microfluidique entre au moins un canal d'entrée en amont des pièges capillaires et au moins un canal de sortie en aval des pièges capillaires. Le procédé peut comporter le contrôle de la vitesse de séchage par le contrôle du flux de fluide dans le dispositif microfluidique et/ou par le choix de la taille des pores.

Le procédé peut comporter une étape d'évacuation du fluide entourant les microgouttes après l'étape de séchages. Dans le cas d'un liquide, cette évacuation peut se faire par évaporation de ce liquide, à travers les entrées et sorties du microcanal ou à travers une surface poreuse. L'évacuation peut aussi être forcée, à travers l'injection d'un autre liquide ou gaz, à travers le microcanal. Dans ce cas, l'écoulement du liquide ou gaz remplace le liquide initial.

Le procédé peut comporter la visualisation en temps réel de la synérèse et du séchage par un dispositif d'observation de la matrice sol-gel dans le ou chaque piège capillaire, notamment par un dispositif optique permettant de former une image de chaque microgoutte.

L'invention a également pour objet, selon un troisième aspect, un procédé de détection et/ou de piégeage d'un ou plusieurs analytes dans un fluide à tester à l'aide du dispositif microfluidique tel que décrit précédemment ou du dispositif microfluidique fabriqué par le procédé tel que décrit précédemment, la ou les microgouttes piégées dans le ou les pièges capillaires comportant chacune dans la matrice sol-gel un ou plusieurs capteurs moléculaires configurés pour détecter et/ou piéger un ou plusieurs analytes cibles, le procédé comportant l'exposition de la ou des microgouttes piégées dans le dispositif microfluidique à un fluide à tester et la détection et/ou le piégeage du ou des analytes cibles dans le fluide à tester.

La localisation précise des microgouttes dans le dispositif microfluidique permet la visualisation directe de la présence de l'analyte cible ou des analytes cibles dans le fluide à tester. Le fait de piéger l'analyte cible peut permettre de l'extraire du fluide à tester, ceci afin de réduire la concentration de l'analyte cible dans le fluide en sortie du dispositif microfluidique et/ou de capturer les analytes cibles dans le fluide afin de les récupérer et éventuellement les utiliser ultérieurement.

Le fait que les microgouttes sont intégrées dans un dispositif microfluidique et fixe dans ce dernier permet leur exposition facile au fluide à tester et la détection et/ou le piégeage des analytes cibles sans qu'il ne soit nécessaire de manipuler les microgouttes ni de modifier le dispositif. Ceci facilite également l'analyse des microgouttes.

Dans le cas où le dispositif comporte plusieurs capteurs moléculaires, il permet la détection et/ou le piégeage en parallèle de plusieurs analytes cibles dans le fluide à traiter.

De plus, contrairement aux dispositifs de détection électronique d'un ou plusieurs analytes cibles, un tel dispositif ne nécessite pas de calibration particulière.

De préférence, le ou les capteurs moléculaires sont tels que décrits précédemment en relation avec le dispositif microfluidique.

De préférence, le fluide à tester est un liquide ou un gaz.

De préférence, le procédé comporte la circulation du fluide dans le dispositif microfluidique d'un canal d'entrée du dispositif microfluidique en amont du ou des pièges capillaires à un canal de sortie du dispositif microfluidique en aval du ou des pièges capillaires à l'aide d'un système microfluidique, notamment une pompe, un pousse seringue ou un différentiel de pression.

De préférence, la présence du ou des analytes cibles est détectée par un changement d'une propriété optique du ou de chaque capteur moléculaire, notamment de la couleur, l'absorbance, la réflectance, la fluorescence ou la luminescence du ou de chaque capteur moléculaire.

De préférence, le fluide est un gaz, notamment l'air ambiant, et l'exposition de la ou des microgouttes se fait par circulation du gaz entre le canal d'entrée et le canal de sortie dans le dispositif microfluidique, notamment dans la chambre de piégeage. La circulation forcée du gaz peut être obtenue au moyen d'un régulateur de débit massique, d'une pompe, d'un pousse seringue, d'un différentiel de pression ou d'un système équivalent. Pour détecter, l'analyte, l'utilisateur n'a donc qu'à injecter dans le dispositif microfluidique le gaz présent dans l'environnement dans lequel la détection doit être effectuée, pour vérifier la présence de l'analyte cible ou non et/ou sa concentration et/ou le piéger.

Lorsque le fluide est un gaz, notamment l'air ambiant, l'exposition de la ou des microgouttes peut se faire au travers d'une paroi poreuse au gaz du dispositif microfluidique, notamment de la chambre de piégeage. Il suffit alors de poser le dispositif microfluidique dans l'environnement dans lequel la détection doit être effectuée pour vérifier la présence de l'analyte cible ou non et/ou sa concentration et/ou piéger les analytes cibles.

Le procédé peut comporter l'introduction d'un liquide dans le dispositif microfluidique jusqu'à former un front de liquide à proximité de la ou des microgouttes, notamment le long d'une marche dans le dispositif microfluidique, la ou les microgouttes n'étant pas au contact du liquide mais à un gaz formé par évaporation du liquide dans le dispositif microfluidique à partir du front de liquide.

En variante, le procédé comporte l'introduction d'un liquide dans le dispositif microfluidique et sa circulation entre le canal d'entrée et le canal de sortie et la détection directement dans le liquide de la présence ou non de l'analyte cible.

De préférence, le procédé comporte la détermination de la concentration à laquelle est exposée la ou chaque microgoutte du dispositif microfluidique en au moins un analyte cible dans le fluide à tester, notamment par l'intensité de la propriété optique mesurée, notamment une intensité de couleur, de fluorescence ou de luminescence. Dans ce cas, la concentration peut être déterminée précisément en se reportant à des courbes de calibration préétablies.

Le procédé peut comporter la détection d'un gradient de concentration d'un ou plusieurs analytes cibles dans le fluide à tester par la visualisation notamment d'intensité de détection différentes selon la position de la microgoutte sur le dispositif microfluidique.

L'invention a également pour objet, selon un quatrième aspect, un procédé d'évaluation d'une matrice sol-gel dans un dispositif microfluidique tel que décrit précédemment ou fabriqué par le procédé décrit précédemment, la ou les microgouttes piégées dans les pièges capillaires comportant ladite matrice sol-gel.

Le procédé peut comporter l'observation de la formation de la matrice ou de la synérèse de la matrice sol-gel en temps réel, notamment l'observation du diamètre de la microgoutte en temps réel lors de l'étape de formation du gel, de synérèse et de séchage.

Le procédé peut comporter l'évaluation du temps de gel de la matrice sol-gel du sol dans la microgoutte lors de la formation de cette dernière dans la microgoutte, notamment pour en déduire le temps de gel du matériau sol-gel dans des volumes macroscopiques. Le procédé peut comporter l'application d'un flux fluide, notamment d'huile dans le dispositif microfluidique pour générer un mouvement de fluide dans la ou chaque microgoutte et l'observation du mouvement de microbilles observables, notamment de microbilles fluorescentes, dans la microgoutte, le temps de gel étant déterminé par l'observation de l'immobilisation des microbilles dans le gel.

Le procédé peut comporter le contrôle de la température de la microgoutte ou de chaque microgoutte.

L'invention pourra être mieux comprise à la lecture de la description qui va suivre d'exemples de mise en oeuvre non limitatifs de l'invention, en regard du dessin ci-annexé, sur lequel :

### Brève description des dessins

[Fig 1] la figure 1 représente schématiquement un exemple de dispositif microfluidique selon l'invention,
[Fig 2] la figure 2 est une vue en coupe selon II-II du dispositif de la figure 1,
[Fig 3] la figure 3 est une vue en perspective d'une variante de dispositif microfluidique selon l'invention,
[Fig 4] la figure 4 est une vue schématique selon IV du dispositif microfluidique de la figure 3,
[Fig 5] la figure 5 est une vue schématique en coupe selon V-V du dispositif microfluidique des figures 3 et 4,
[Fig 6A] la figure 6A représente une étape d'un procédé de fabrication d'un dispositif selon l'invention,
[Fig 6B] la figure 6B représente une autre étape du procédé de la figure 6A,
[Fig 6C] la figure 6C représente une autre étape du procédé des figures 6A et 6B,
[Fig 7] la figure 7 est une vue d'un détail du dispositif obtenu par le procédé illustré sur les figures 6A à 6C, après synérèse et séchage de la matrice sol-gel,
[Fig 8] la figure 8 représente une variante de dispositif selon l'invention,
[Fig 9] la figure 9 est une vue en coupe selon IX-IX du dispositif de la figure 8.
[Fig 10] la figure 10 représente la mesure de fluorescence d'un détail X du dispositif de la figure 4 réalisé selon l'exemple 3,
[Fig 11] la figure 11 est un graphique représentant l'intensité de fluorescence des microgouttes du dispositif de l'exemple 3 en fonction du temps pour différents groupes de microgouttes,
[Fig 12] la figure 12 représente des images d'une microgoutte du dispositif réalisé selon l'exemple 4 à des temps différents pendant la formation du gel,
[Fig 13] la figure 13 est un graphique représentant le temps de gel mesuré en fonction de la température avec le dispositif de l'exemple 4,
[Fig 14] la figure 14 un graphique représentant la différence de temps de gel calculé entre le dispositif microfluidique et un dispositif macroscopique en fonction de la température avec le dispositif de l'exemple 4,
[Fig 15] la figure 15 représente des images de microgouttes du dispositif réalisé selon l'exemple 4 avant et après la synérèse,
[Fig 16] la figure 16 est un graphique représentant le diamètre des microgouttes mesuré en fonction du temps avec le dispositif de l'exemple 4,
[Fig 17] la figure 17 est un graphique représentant le temps de gel mesuré en fonction de la température avec le dispositif de l'exemple 5, et
[Fig 18] la figure 18 est un graphique représentant la différence de temps de gel calculé entre le dispositif microfluidique et un dispositif macroscopique en fonction de la température avec le dispositif de l'exemple 5.

### Description détaillée

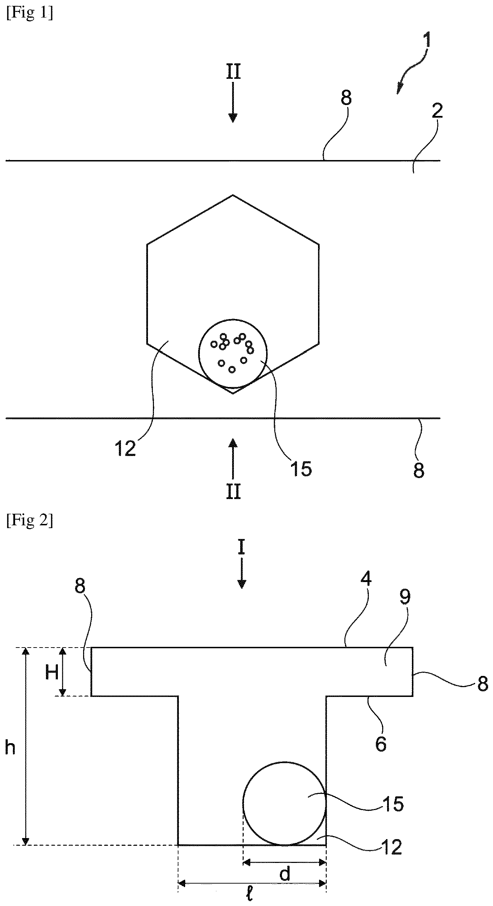

La figure 1 représente schématiquement une première forme de réalisation d'un dispositif microfluidique 1 selon l'invention.

Dans l'exemple illustré sur la figure 1, le dispositif comporte un microcanal 2 comportant un piège capillaire 12 dans lequel une microgoutte 15 comportant une matrice sol-gel est piégée. Le microcanal 2 présente une section rectangulaire et est délimité par une paroi supérieure 4, une paroi inférieure 6 et deux parois latérales 8, comme cela est illustré sur la figure 2.

Dans l'exemple illustré sur les figures 1 et 2, la microgoutte 15 est une microbille comportant la matrice sol-gel à l'état solide après l'étape de synérèse du procédé sol-gel, i.e. la microbille est dépourvue de tout solvant, ce dernier s'étant évaporé et la matrice sol-gel s'étant rétractée. La microgoutte présente alors la plus petite taille qu'elle peut prendre et est indéformable.

Le piège capillaire 12 est formé par une cavité dans la paroi inférieure 6 dans lequel la microgoutte est piégée. Dans l'exemple illustré sur la figure 2, la cavité est une cavité de la paroi inférieure 6, mais elle pourrait être également une cavité de la paroi supérieure 4, la microgoutte serait piégée de la même manière. Comme nous le verrons par la suite, la microgoutte est piégée dans le piège capillaire 12 à l'état liquide, notamment la matrice étant à l'état de sol. Une microgoutte liquide placée dans le microcanal 2 et écrasée présente une surface externe importante. Cette microgoutte cherche ainsi naturellement à réduire sa surface externe, ce qui l'amène à migrer vers le piège capillaire 12 présentant une plus grande hauteur lorsqu'elle arrive à proximité du piège capillaire. Le piège capillaire 12 permet d'immobiliser une ou plusieurs microgouttes, ce qui permet par exemple de les examiner à l'aide d'un microscope et/ou de suivre le déroulement d'une réaction au sein d'un piège pendant une période de temps importante.

Dans l'exemple illustré sur la figure 2, la hauteur H du microcanal 2, définie par la distance entre les parois supérieures 4 et inférieure 6, en bordure du piège capillaire 12 est inférieure à la plus petite dimension d de la microgoutte 15 après l'étape de synérèse du procédé sol-gel. Ainsi, la microgoutte 15 est définitivement piégée dans le piège capillaire 12.

De préférence, la hauteur h du piège capillaire 12, définie entre le fond du piège capillaire 12 et la paroi opposée du microcanal 2, est supérieure ou égale à deux fois la hauteur *H* du microcanal 2 en bordure du piège capillaire 12. De préférence, la largeur *l* du piège capillaire 12 est supérieure ou égale à deux fois la hauteur H du microcanal 2 en bordure du piège capillaire 12. Ces dimensions permettent un piégeage efficace de la microgoutte avant les étapes de formation du gel, de synérèse et de séchage du procédé sol-gel d'obtention de la matrice sol-gel.

La hauteur H du microcanal 2 en bordure du piège capillaire 12 est de préférence comprise entre 15 µm et 200 µm, mieux entre 50 µm et 150 µm, par exemple sensiblement égal à 100 µm.

La hauteur h du piège capillaire 12 est, de préférence, comprise entre 30 µm et 800 µm, mieux entre 450µm et 600µm, par exemple sensiblement égale à 520 µm.

Dans l'exemple illustré sur la figure 1, le piège capillaire 15 est de section transversale hexagonale. Cependant l'invention n'est pas limitée à une telle forme de piège capillaire. Ce dernier pourrait par exemple être de section transversale circulaire, polygonale ou comporter une zone de piégeage principale et une ou plusieurs zones de piégeage secondaires comme cela est décrit dans la demande de brevet WO 2018/060471.

La matrice sol-gel est obtenue préférentiellement par un procédé sol-gel hydrolytique.

Elle est obtenue à partir de précurseurs choisis parmi les alcoxydes, notamment les alcoxydes de zirconium, notamment le butoxyde de zirconium (TBOZ), le propoxide de zirconium (TPOZ) les alcoxydes de titane, de niobium, de vanadium, d'yttrium, de cérium, d'aluminium ou de silicium, notamment le tétraméthoxysilanes (TMOS), le tétraéthoxysilanes (TEOS), le tétrapropoxysilane (TPOS), le tétrabutoxysilane (TBOS), les triméthoxysilane, notamment le méthyltriméthoxysilane (MTMOS), le propyltriméthoxysilane (PTMOS,) et l'éthyltriméthoxysilane (ETMOS), les triéthoxysilane, notamment le méthyltriéthoxysilane (MTEOS), l'éthyltriéthoxysilane (ETEOS), le propyltriéthoxysilane (PTEOS), l'aminopropyltriethoxysilane (APTES) et leurs mélanges.

La ou les microgouttes peuvent comporter un solvant, notamment un solvant choisi parmi l'eau, le méthanol, l'éthanol, le propanol, le butanol, le 2-méthoxyéthanol, l'acétone, le DMSO, le DMF, le NMF, le formamide, la méthyléthylcétone, le chloroforme, le dichlorométhane, l'acide acétique et leurs mélanges, de préférence un mélange d'eau et de butanol.

La ou les microgouttes peuvent comporter d'autres additifs, notamment des catalyseurs, tels que l'acide acétique, l'acide nitrique, l'acide sulfurique, l'acide fluorhydrique et l'hydroxyde d'ammonium, ou des stabilisant, tels que l'acide acétique, acetylacetone, les glycols, le methoxyethanol, les glycols, les beta-cétoesters.

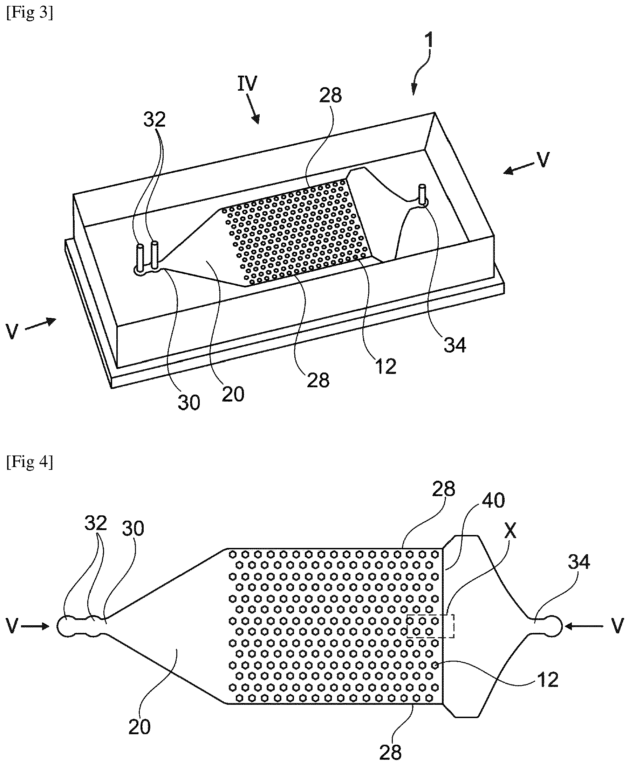

Les figures 3 à 5 représentent schématiquement une deuxième forme de réalisation d'un dispositif microfluidique 1 selon l'invention.

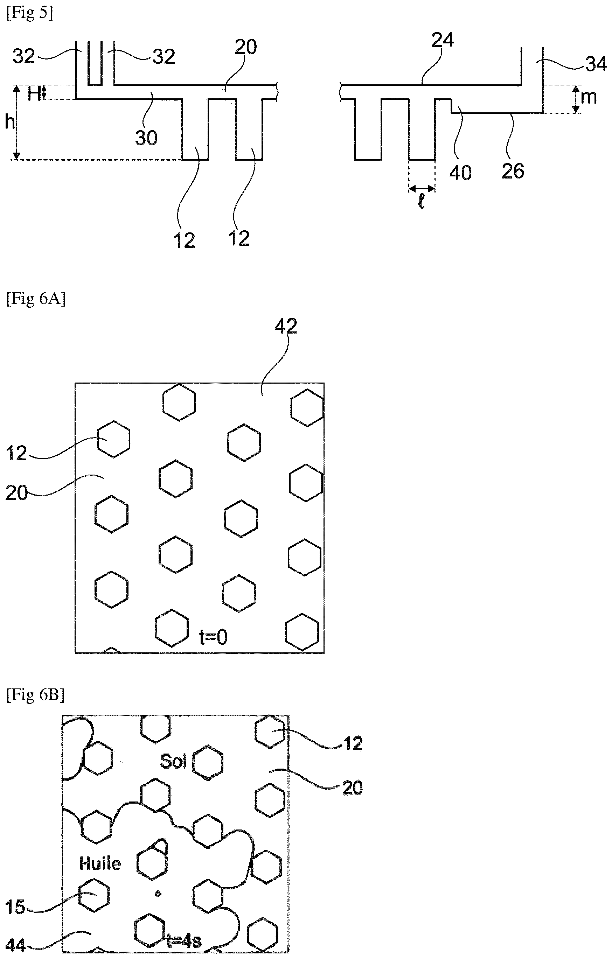

Dans l'exemple illustré sur les figures 3 à 5, le dispositif 1 comporte une chambre de piégeage 20 comportant une pluralité de pièges capillaires 12 ordonnées selon une pluralité de rangées de pièges 12 agencées en quinconce les unes par rapport aux autres. La chambre de piégeage 20 est reliée en amont des pièges capillaires 12 à un microcanal d'entrée 30 alimenté en fluide par deux microcanaux 32 d'alimentation en fluide et en aval à un microcanal de sortie 34. La chambre de piégeage 20 présente une section rectangulaire et est délimité par une paroi supérieure 24 et une paroi inférieure 26, notamment visible sur la figure 5, et quatre parois latérales 28, notamment visible sur les figures 3 et 4.

Le nombre de pièges capillaires est de préférence compris entre 10 et 5000, notamment entre 100 et 500, par exemple égal à 231.

Comme cela est visible sur la figure 3, le dispositif microfluidique 1 peut être formé dans une plaque d'un matériau approprié tel par exemple que du PDMS (poly-dimethylsiloxane) par utilisation d'une technique courante de lithographie souple, comme cela est connu. Les microcanaux 30 et la chambre de piégeage 20 peuvent être formés à la surface de la plaque, sur laquelle est collée une lame de microscope en verre, par exemple.

La chambre de piégeage 20 comporte également une marche 40 en aval des pièges capillaires 12 présentant une hauteur m plus grande que celle de la chambre de piégeage en bordure de la marche. Une telle marche 40 permet, par insertion d'un liquide par le canal de sortie 34, de former, dans la chambre de piégeage 20, un front de liquide en aval des pièges capillaires 12, le front de liquide étant défini par la forme de la marche. En effet, le liquide est maintenu par tension interfaciale dans la zone de plus grande hauteur. De préférence, la marche présente une hauteur m comprise entre 80 µm et 250 µm, de préférence entre 100 µm et 150 µm. De préférence, la marche présente une hauteur m sensiblement comprise entre 105% et 200%, de préférence 110% et 130%, notamment sensiblement égal à 115% de la hauteur de la chambre de piégeage 20 en bordure de la marche 40.

Chaque piège capillaire 12 est de préférence tel que décrit précédemment et peut piéger une microgoutte 15 comportant une matrice sol-gel.

De préférence, le pourcentage volumique en alcool du sol est compris entre 80% et 20%.

Les pièges capillaires peuvent piéger les microgouttes par le procédé illustré en relation avec les figures 6A à 6C décrit ci-dessous dit de « cassage des gouttes dans des pièges capillaires » décrit par exemple dans la demande de brevet FR 3 056 927, dont le contenu est intégré ici par référence.

Lors d'une première étape illustrée à la figure 6A, une première solution 42 comportant un sol est introduite dans la chambre de piégeage 20 par l'intermédiaire d'un des microcanaux d'alimentation 32 de sorte à la remplir.

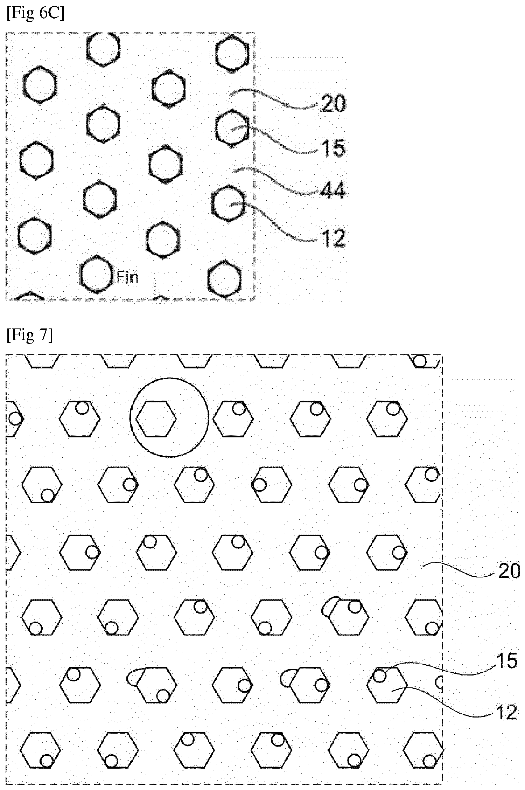

Lors d'une deuxième étape illustrée à la figure 6B, une deuxième solution 44 comportant un solvant non miscible avec la première solution, notamment une huile, est introduite dans la chambre de piégeage 20 par l'intermédiaire d'un des microcanaux d'alimentation 32. La deuxième solution chasse la première solution de la chambre de piégeage et forme les microgouttes de première solution directement dans les pièges capillaires 12 par cassure de la première solution au niveau de chaque piège capillaire comme cela est visible sur la figure 6C.

De préférence, les propriétés de mouillages sont telles que le fluide porteur mouille les parois solides, formant ainsi un film autour de la ou des microgouttes comportant le sol. Dans ce cas, les microgouttes formées dans les pièges capillaires sont sensiblement identiques.

En variante non illustrée, le piégeage des microgouttes 15 se fait par formation des microgouttes comportant le sol en amont des pièges capillaires 12 et par piégeage des microgouttes 15 déjà formées. La formation des microgouttes peut se faire directement dans le dispositif microfluidique dans une phase mobile entre le canal d'entrée 30 et le canal de sortie 34.

De nombreux procédés ont déjà été proposés pour former de telles premières microgouttes dans une phase mobile. On peut par exemple citer les exemples de procédé :
a) procédé dit de « flow-focusing » décrit par exemple dans S.L. Anna, N. Bontoux et H.A. Stone, « Formation of dispersions using 'Flow-Focusing' in microchannels », Appl. Phys. Lett. 82, 364 (2003),
b) procédé dit de « step emulsification » décrit par exemple par R. Seemann, M. Brinkmann, T. Pfohl, and S. Herminghaus, dans "Droplet based microfluidics.," Rep. Prog. Phys., vol. 75, no. 1, p. 016601, Jan. 2012,
c) procédé combinant les procédés de « flow-focusing » et de « step emulsification », décrit par exemple par V. Chokkalingam, S. Herminghaus, and R. Seemann, dans "Self-synchronizing pairwise production of monodisperse droplets by microfluidic step emulsification," Appl. Phys. Lett., vol. 93, no. 25, p. 254101, 2008,
d) procédé dit à « jonction en T » décrit par exemple par G. F. Christopher and S. L. Anna, dans "Microfluidic methods for generating continuous droplet streams," J. Phys. D. Appl. Phys., vol. 40, no. 19, pp. R319-R336, Oct. 2007,
c) procédé dit « à gradient de confinement» décrit par exemple par R. Dangla, S. C. Kayi, and C. N. Baroud, dans "Droplet microfluidics driven by gradients of confinement.," Proc. Natl. Acad. Sci. U. S. A., vol. 110, no. 3, pp. 853-8, Jan. 2013, ou
f) procédé de « micro-segmented flows » décrit par exemple par A. Funfak, R. Hartung, J. Cao, K. Martin, K. H. Wiesmüller, O. S. Wolfbeis, and J. M. Köhler, dans "Highly resolved dose-response functions for drug-modulated bacteria cultivation obtained by fluorometric and photometric flow-through sensing in microsegmented flow," Sensors Actuators, B Chem., vol. 142, no. 1, pp. 66-72, 2009, dans lequel deux solutions en proportions différentes et contrôlées sont mélangées au niveau d'une fonction hors du système microfluidique pour former des gouttes microlitriques séparées par une phase immiscible puis procédé de division de ces gouttes en microgouttes en les injectant par exemple dans un système microfluidique contenant une pente.

Ces procédés permettent notamment de former une pluralité de microgouttes de dimensions sensiblement égales. Les dimensions des microgouttes obtenues peuvent être contrôlées en modifiant les paramètres de formation des microgouttes, notamment la vitesse de circulation des fluides dans le dispositif et/ou la forme du dispositif.

La production des microgouttes 15 peut être faite sur le même système microfluidique que le procédé ou sur un dispositif différent. Dans ce dernier cas, les microgouttes 15 peuvent être stockées dans un ou plusieurs récipients extérieurs avant d'être injectées dans le système microfluidique. Ces microgouttes 15 peuvent être toutes identiques ou certaines d'entre elles peuvent être de différentes compositions, concentrations et/ou tailles.

Après formation de ces microgouttes 15, ces dernières peuvent être acheminées jusqu'au piège capillaires 12 par entraînement par un flux d'un fluide et/ou par des pentes ou des reliefs en forme de rails. Dans les deux cas, l'addition de rails peut permettre d'optimiser le remplissage des pièges capillaires 12, de manière sélective, par exemple en combinaison avec l'utilisation d'un laser infra-rouge, comme cela est décrit par E. Fradet, C. McDougall, P. Abbyad, R. Dangla, D. McGloin, and C. N. Baroud, dans "Combining rails and anchors with laser forcing for selective manipulation within 2D droplet arrays.," Lab Chip, vol. 11, no. 24, pp. 4228-34, Dec. 2011.

Si la production des microgouttes est réalisée hors du dispositif microfluidique, leur transport du stockage au dispositif microfluidique 1 peut se faire directement via un tube reliant par exemple le système de production et le système de piégeage ou par aspiration et injection avec une seringue.

Les microgouttes 15 piégées dans les pièges capillaires comporte alors un sol qui forme la matrice sol-gel par un procédé sol-gel. Dans les procédés décrit précédemment, le procédé sol-gel débute avant le piégeage des microgouttes 15 dès que le sol est formé. Il est alors préférable que le temps de gel soit inférieur au temps nécessaire entre la réalisation du sol et le piégeage des microgouttes 15 afin d'éviter la formation de la matrice sol-gel hors des pièges capillaires 12, ce qui bloquerait la ou les microgouttes concernées hors des pièges capillaires.

En variante, les microgouttes 15 comportant un sol piégées dans les pièges capillaires 12 peuvent être formées en plusieurs étapes par coalescence de plusieurs microgouttes dans chaque pièges capillaires 12. Les microgouttes permettant la formation de la microgoutte comportant le sol peuvent être ajoutées en une ou plusieurs étapes. Le fait de faire le sol en plusieurs étapes dans la microgoutte par adjonction de microgouttes complémentaires permet de multiplier les possibilités. Il est possible d'avoir des premières microgouttes toutes identiques dans les pièges capillaires et d'y ajouter des microgouttes complémentaires de compositions différentes et/ou en quantités différentes dans les pièges capillaires différents. Cela permet aussi la formation de la matrice sol-gel uniquement dans les pièges capillaires 12, le procédé sol-gel ne se faisant pas tant que le sol n'est pas complet. Par exemple, des microgouttes d'une première solution comportant une partie du sol peuvent être piégée dans les pièges capillaires 12 par une des méthodes précédemment décrites, puis des microgouttes complémentaires comportant l'autre partie du sol, par exemple l'eau, peuvent être ajoutées et piégées dans chaque piège capillaire 12 pour former, par coalescence, les microgouttes 15 comportant le sol.

La coalescence peut être sélective ou non.

Pour fusionner l'ensemble des microgouttes en contact dans une chambre de piégeage 20, le dispositif peut être perfusé avec un fluide dépourvu de surfactant. La concentration de surfactant dans le fluide du système microfluidique diminue, ce qui permet de déplacer l'équilibre d'adsorption de surfactant à l'interface vers la désorption. Les microgouttes perdent leur effet stabilisateur et fusionnent spontanément avec les microgouttes avec lesquelles elles sont en contact.

En variante, le dispositif microfluidique est perfusé avec un fluide contenant un agent déstabilisant. L'agent déstabilisant est par exemple le 1H,1H,2H,2H-perfluorooctan-1-ol dans une huile fluorée dans le cas de microgouttes aqueuses.

En variante encore, l'ensemble des microgouttes en contact dans une chambre de piégeage 20 sont fusionnées en amenant un stimulus physique externe, comme des ondes mécaniques, des ondes de pression, un changement de température ou un champ électrique.

Pour fusionner les microgouttes de manière sélective, un laser infra-rouge peut être utilisé, comme cela est décrit par E. Fradet, P. Abbyad, M. H. Vos, and C. N. Baroud, dans "Parallel measurements of reaction kinetics using ultralow-volumes.," Lab Chip, vol. 13, no. 22, pp. 4326-30, Oct. 2013, ou des électrodes localisées 37 au niveau des interfaces de microgouttes entre les zones de piégeage peuvent être activées, comme cela est illustré sur la figure 51, ou des ondes mécaniques peuvent être focalisées en un ou plusieurs points.

L'invention n'est pas limitée aux exemples de coalescence décrits ci-dessus. Toute méthode permettant de déstabiliser l'interface entre deux microgouttes en contact peut être utilisée pour fusionner les microgouttes.

Il est alors possible d'effectuer une mesure de l'état des microgouttes obtenues et/ou d'observer en temps réel ces dernières. Cela permet par exemple l'étude du procédé sol-gel.

Les procédés de piégeage ci-dessus permettent le piégeage de microgouttes 15 identiques et/ou différentes dans les pièges capillaires, notamment de compositions du sol différentes ou de concentrations en composé du sol différents.

Lors de ce procédé sol-gel, chaque matrice sol-gel passe par une étape de rétractation de la matrice sol-gel avec expulsion du solvant, autrement appelé synérèse, et évaporation du solvant, autrement appelé séchage de la matrice, pour former les microbilles comportant la matrice sol-gel comme illustré sur la figure 7. Dans le dispositif microfluidique tel que décrit précédemment, les microgouttes 15 sont encapsulées dans le dispositif microfluidique. Dans ce cas, le solvant peut s'évaporer au travers d'une paroi du dispositif lorsque cette dernière est poreuse au gaz, notamment au travers de la paroi en PDMS ou par la circulation d'un gaz dans le dispositif microfluidique entre le canal d'entrée 30 et le canal de sortie 34. L'évaporation du solvant lors de l'étape de synérèse peut être contrôlée par le contrôle de la taille des pores de la paroi poreuse et/ou par le contrôle de la vitesse de circulation du gaz dans le dispositif microfluidique.

De préférence, le dispositif microfluidique 1 comporte un système de contrôle de la température non représenté dans la chambre de piégeage 20 permettant de contrôler la formation de la matrice sol-gel notamment. Le système de contrôle permet notamment de baisser la température du dispositif microfluidique 1 durant le piégeage des microgouttes 15 afin de ralentir la formation de gel et éviter que ce dernier ne se forme avant le piégeage des microgouttes 15 et/ou d'augmenter la température du dispositif microfluidique durant la formation de la matrice sol-gel afin de l'accélérer. De préférence, la température du dispositif microfluidique durant le piégeage est comprise entre 0 et 30 °C, mieux entre 5 et 15°C et la température du dispositif microfluidique durant la formation de la matrice sol-gel est comprise entre 20 et 80°C, mieux entre 20 et 60°C et encore mieux entre 30 et 50°C.

Dans les exemples décrits ci-dessus, les microgouttes 15 peuvent également comporter un ou plusieurs capteurs moléculaires intégrés dans la matrice sol-gel présentant une propriété optique, notamment de couleur ou de fluorescence, qui change en contact avec un analyte cible particulier. Le changement de propriété optique peut se faire par réaction ou liaison avec l'analyte cible et permet de détecter rapidement par simple observation des microgouttes 15 localisées dans les pièges capillaires 12 la présence ou non dans un fluide en contact avec les microgouttes du ou des analytes cibles correspondants. Dans le cas où le ou les capteurs moléculaires forment une liaison avec l'analyte cible correspondant, il est également possible de collecter l'analyte en récupérant les microgouttes dans le ou les pièges capillaires.

Le ou les capteurs moléculaires peuvent comporter des molécules de détection choisies parmi le 4-amino-3-penten-2-one, p-diméthylaminobenzaldéhyde, le p-diméthylaminocinnamaldéhyde, le p-méthoxybenzaldéhyde, le 4-méthoxy-naphtaldéhyde, l'acide croconique, le p-diazobenzènesulfonique, la 4-aminoantipyrine, l'indigo carminé, un composé quinoïque, un mélange d' iodure et d'un composé choisi parmi l'amidon, l'amylose, l'amylopectine, le xyloglucane, le xylane, le chitosane, le glycogène, l'alcool polyvinylique ou un composé de l'alcool polyvinylique, la cellulose ou un composé de la cellulose, α-cyclodextrine, la théobromine et les polymères blocs d'oxydes de polypropylène et de polyéthylène, un capteur comportant un phénol et du nitroprussiate de sodium, le composé tel que décrit dans la demande WO 2005/100371. Des additifs tels que des solvants, des oxydants des réducteurs, des acides, ou des bases peuvent être ajoutés afin de favoriser les réactions avec les analytes cibles. Cette liste n'est pas exhaustive : toute molécule permettant, seule ou combinée à d'autres, une interaction plus ou moins sélective avec un analyte ou une fonction chimique cible est susceptible d'être ajouté au capteur moléculaire, notamment des polymères, complexants, indicateurs colorés de pH, colorants, fluorophores, phtalocyanines et porphyrines.

Le ou les capteurs moléculaires peuvent permettre de détecter chacun un analyte cible choisi parmi les composés organiques volatiles, notamment ceux définis sur les listes de polluants prioritaires de l'ANSES (Agence Nationale de Sécurité Sanitaire de l'alimentation de l'environnement et du travail), notamment les aldéhydes tels que le formaldéhyde, l'acétaldéhyde et l'hexaldehyde, le monoxyde ou le dioxyde de carbone, le dioxygène, l'hydrogène, le phénol et ses dérivés, les composés indoliques, notamment l'indole, le scatole ou le tryptophane, les chloramines, le dioxyde d'azote, l'ozone, les composés halogénés, notamment le trifluorure de bore, ses dérivés et le trichlorure de bore, les hydrocarbure aromatiques tels que le naphtalène, le benzène et le toluène et non aromatiques tels que le pentane, l'hexane et l'heptane, l'acroléine, le dioxyde d'azote et l'ethylbenzene.

La concentration en la molécule de détection composant le capteur moléculaire dans une microgoutte de sol doit être adaptée de manière à avoir la concentration la plus élevée possible tout en restant soluble dans la microgoutte et dans la forme finale dédiée à l'analyse, notamment le gel ou le matériau solide. La concentration optimale dépend des molécules constituant le capteur moléculaire et de la formulation sol-gel. Par exemple la concentration de 4-amino-3-penten-2-one pour détecter le formaldéhyde avec une formulation de sol contenant du butoxyde de zirconium, de l'acetylacetate, du butanol, du TEOS et de l'eau en proportions molaires respectives (1:1:16:1:22) est, dans le sol précuseur d'une microgoutte 15, de préférence comprise entre 0,05 et 0,4M, mieux entre 0,2 à 0,3M dans le sol.

Les microgouttes 15 peuvent toutes comporter un même capteur moléculaire dans la même concentration ou peuvent comporter des capteurs moléculaires différents ou dans des concentrations différentes.

En variante, les microgouttes 15 peuvent comporter chacun plusieurs capteurs moléculaires ayant des réponses aux analytes cibles distinctes, par exemple de couleurs différentes.

Le ou les capteurs moléculaires peuvent être directement insérés dans le sol lors de la formation du sol préalablement au piégeage ou directement dans la première solution comportant une partie du sol.

En variante, le ou les capteurs moléculaires peuvent être insérés sous la forme de microgouttes additionnelles dans les pièges capillaires 12 puis fusionnés avec les microgouttes comportant une partie du sol ou comportant le sol avant formation du gel ou le gel étant en formation. Les microgouttes additionnelles peuvent être identiques ou différentes, notamment comporter un ou plusieurs capteurs moléculaires différents ou en concentrations différentes et/ou le nombre de microgouttes additionnelles piégées dans chaque piège capillaire peut être identiques ou différents.

Il est possible de contrôler possiblement l'adjonction des microgouttes complémentaires ou additionnelles par la forme des microgouttes et le procédé d'adjonction des microgouttes additionnelles ou complémentaires, comme cela est décrit dans la demande de brevet FR 3 056 927.

Il apparait alors clairement que les différents procédés décrits précédemment, associées à la forme du dispositif microfluidique 1, notamment des pièges capillaires 12, et à la composition et la forme des microgouttes permet d'obtenir une grande diversité de dispositif permettant de faire des études ou mesures statistiques et/ou du multiplexage.

La concentration à laquelle les analytes doivent être détectés sont en général soit lié à un cahier des charges précis, notamment à un procédé industriel particulier, soit en réponse à une réglementation. La composition de la microgoutte et la formation de la matrice sol-gel dépend de la concentration qui doit être détecté selon le cahier des charges et/ou la réglementation. Par exemple, la réglementation actuelle concernant le formaldéhyde en France impose des actions au-delà d'un seuil de 100 µg/m³ en formaldéhyde. Les microgouttes 15 comportant une matrice sol-gel formé dans les exemples permettent de préférence la détection du formaldéhyde en une concentration comprise entre 10 et 500 µg/m³.

Le dispositif peut également permettre de déterminer la concentration en analyte dans le fluide à tester ou un gradient de concentration en analyte dans le fluide à tester par la visualisation notamment de l'intensité de détection de chaque microgoutte 15 comportant une matrice sol-gel selon sa position sur le dispositif microfluidique.

Lors de l'étape de détection des analytes cibles, le fluide à tester est de préférence introduit dans le dispositif, notamment par un système de circulation du fluide non illustré, par le canal d'entrée 30 et mis en circulation dans le dispositif pour venir en contact des microgouttes 15.

En variante, lorsque le fluide à tester est gazeux, il est mis en contact des microgouttes 15 par diffusion au travers d'une paroi poreuse, notamment en PDMS, du dispositif microfluidique. Le dispositif n'a alors qu'à être mis dans l'environnement contenant le gaz à tester.

En variante encore, le fluide à tester est inséré dans le dispositif à l'état liquide pour former un front de liquide délimité par la marche 40 comme décrit précédemment et les microgouttes 15 sont alors mis en contact avec les vapeurs issus du liquide se diffusant dans le dispositif microfluidique.

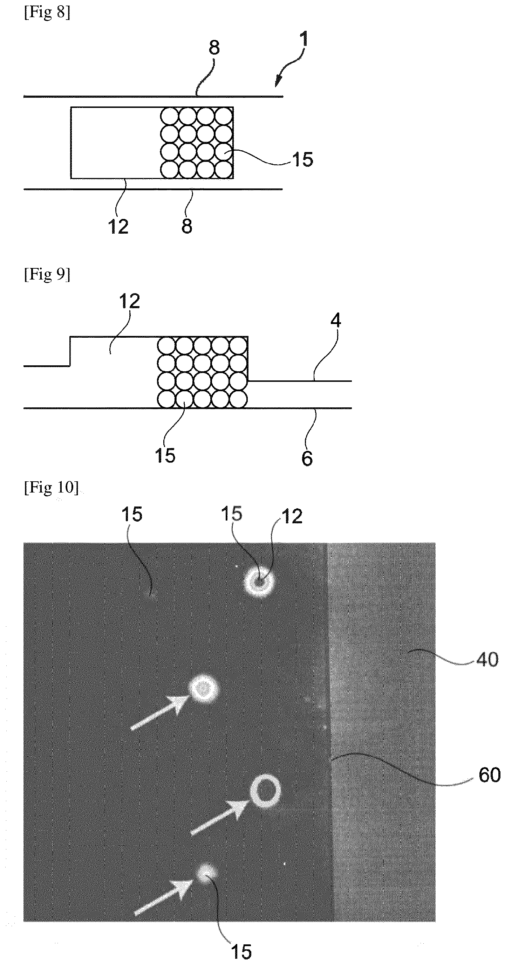

Les figures 8 et 9 représentent schématiquement une troisième forme de réalisation d'un dispositif microfluidique 1 selon l'invention qui diffère des précédentes en ce que le dispositif comporte un piège capillaire 12 qui piège une pluralité de microgouttes 15 comportant une matrice sol-gel. Dans ce dispositif, les microgouttes 12 sont de préférence formées préalablement à leur piégeage. Dans l'exemple illustré, le piège capillaire 12 est formé d'une cavité dans la paroi supérieure 4 est les microgouttes 15 comportant une matrice sol-gel forment une colonne de microgouttes dans le piège capillaire 12. De préférence, dans un tel dispositif comportant plusieurs microgouttes par piège capillaire 12, les microgouttes 15 comportent un tensioactif empêchant la coalescence des gouttes entre elles.

Dans cette forme de réalisation, les microgouttes 15 comportant le sol sont formées préalablement à leur piégeage dans le piège capillaire 12.

### Exemple 1

Pour obtenir une solution de butoxyde de zirconium, un premier mélange est réalisé à température ambiante (20°C) avec du butoxyde de zirconium et de l'acetylacetate en proportion égales, en solvant butanol. Dans un mode préférentiel, les proportions molaires respectives sont (1 :1 :16). On laisse reposer le mélange une nuit puis on y ajoute du TEOS et de l'eau de manière à obtenir des proportions molaires respectives finales (1 :1 :16 :1 :22) avant de procéder à une agitation vigoureuse. La solution de sol obtenue est alors rapidement introduite dans le dispositif microfluidique selon la deuxième forme de réalisation décrit ci-dessus à 20°C préalablement rempli d'huile fluorée. La solution de sol et répartie dans les pièges capillaires par la méthode de cassage précédemment décrite. Le microsystème est alors chauffé, par exemple à 40°C, pour accélérer la formation du gel dans les microgouttes 15, la synérèse et l'évaporation du solvant au travers d'une paroi en PDMS du dispositif microfluidique.

Un dispositif microfluidique selon la figure 7 est alors obtenu.

### Exemple 2

Un dispositif microfluidique est préparé comme à l'exemple 1, à une différence près, du 4-amino-3-penten-2-one est dissout dans la solution de butoxyde de zirconium avant l'ajout de TEOS et d'eau. Le 4-amino-3-penten-2-one constitue un ensemble de détection pour détecter le formaldéhyde. En présence de ce dernier, il passe d'incolore à jaune sombre en émettant de la fluorescence de couleur jaune.

Les microgouttes 15 se sont bien formées.

### Exemple 3

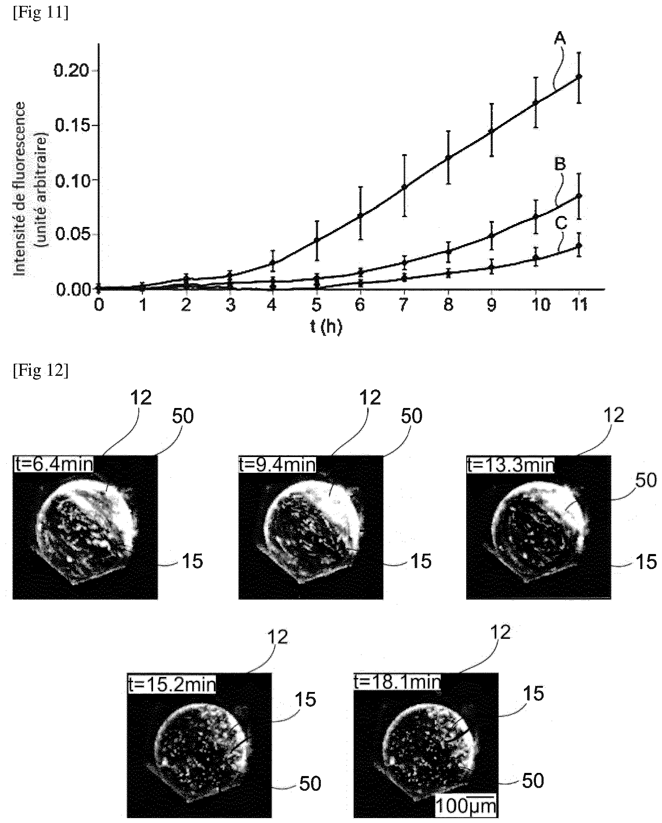

Un dispositif microfluidique préparé comme à l'exemple 2, est exposé à du formaldéhyde gazeux en continu par positionnement d'un front d'une solution de formaldéhyde liquide 60 selon la méthode décrite précédemment. La fluorescence des microgouttes 15 est observée au cours du temps. Une photo à un temps donné d'une partie du dispositif proche du front de liquide 60 est représentée à la figure 10. Il apparait sur cette figure que la fluorescence des microgouttes 15 proches du front de liquide est plus importante que celle des microgouttes 15 plus éloignées. Les microgouttes 15 dans le dispositif sont séparées en trois groupes en fonction de leur distance au front de liquide et une mesure statistique de la fluorescence en fonction du groupe est faite en fonction du temps sur la figure 11, le groupe A étant le plus proche du front de liquide 60 et le groupe C étant le plus éloigné du front de liquide 60. Les microgouttes 15 du groupe A représenté par la courbe A sont les plus fluorescentes et les microgouttes 15 du groupe C représenté par la courbe C sont les moins fluorescentes. Le suivi par fluorescence des microgouttes 15 démontre la réaction entre le formaldéhyde gazeux et la 4-amino-3-penten-2-one dans les microgouttes. L'augmentation progressive de l'intensité au cours du temps en fonction de la distance au front démontre la possibilité de mesurer la concentration en formaldéhyde gazeux dans un fluide. Ainsi, les microgouttes 15 détectent la présence de formaldéhyde et répondent bien en fonction de sa concentration. De plus elles sont capables d'enregistrer de légères variations locales. Le regroupement des microgouttes par colonne montre bien que ce microsystème permet de mesurer la concentration de manière statistique avec un unique microsystème.

### Exemple 4

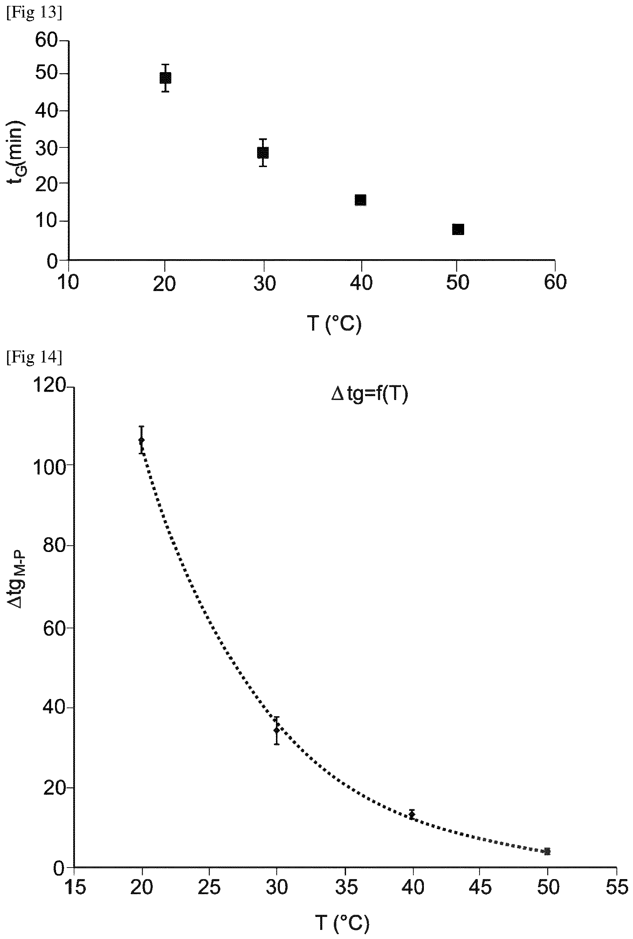

Des microbilles fluorescentes 50 sont ajoutées au sol du dispositif microfluidique préparé selon l'exemple 1 avant injection dans le microsystème fluidique. Les microgouttes de sol 15 emprisonnées dans les pièges capillaires 12 sont soumises à un flux d'huile, ce qui génère un mouvement des microbilles dans le sol. Le mouvement des billes s'arrête à la prise en masse du gel, comme cela est visible sur la figure 12 dans laquelle les microbilles fluorescentes 50 sont observées à des temps différents dans une microgoutte 15, ceci permet de déterminer le temps de gel correspondant au temps entre la formation du sol et la prise en masse du gel. Cette observation a été faite à différentes températures comme l'illustre la figure 13 représentant le temps de gel t_{G} mesuré statistiquement dans le dispositif microfluidique en fonction de la température T. La température dans le dispositif microfluidique est contrôlé par un module à effet Peltier sur lequel le dispositif microfluidique est posé et l'estimation du temps de gel est faites sur plusieurs microgouttes, notamment 20 microgouttes, afin d'obtenir une mesure statistique.

Les temps de gel mesurés dans le dispositif microfluidique sont beaucoup plus courts que ceux mesurés dans des tubes de manière classique. La figure 14 montre une courbe représentant la relation mathématique qui permet de passer de l'un à l'autre pour la matrice sol-gel étudié.

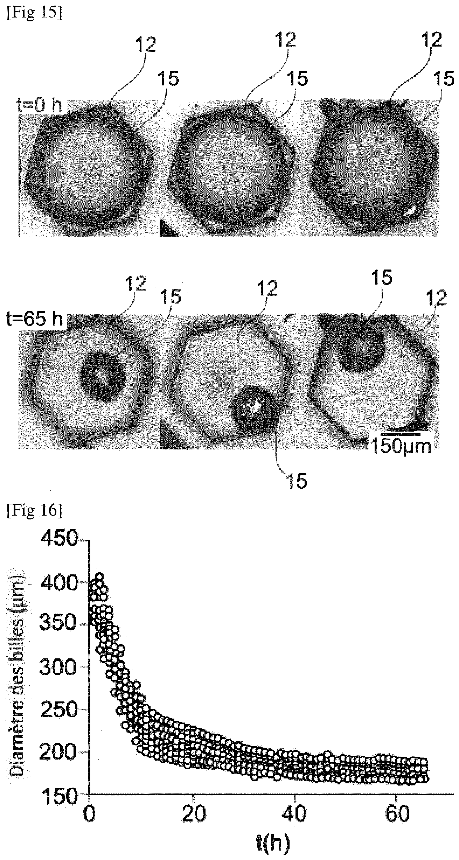

Il est également possible d'observer la synérèse au cours du temps comme cela est représenté sur la figure 15 représentant trois microgouttes 15 à t=0 et à t=65h après synérèse. Il est alors possible de mesurer statistiquement la taille des microgouttes 16 au cours du temps comme cela est illustré sur la figure 15. La courbe est obtenue en prenant une séquence d'image à des temps différents de 10 microgouttes dans 10 pièges différents et en mesurant la taille des microgouttes sur chaque image. La taille des microgouttes 15 passe d'environ 380 µm à 175 µm, ce qui constitue une rétractation de plus de 50%. Ceci permet notamment d'optimiser le procédé sol-gel de préparation de dispositifs microfluidiques pour la détection d'analytes.

### Exemple 5

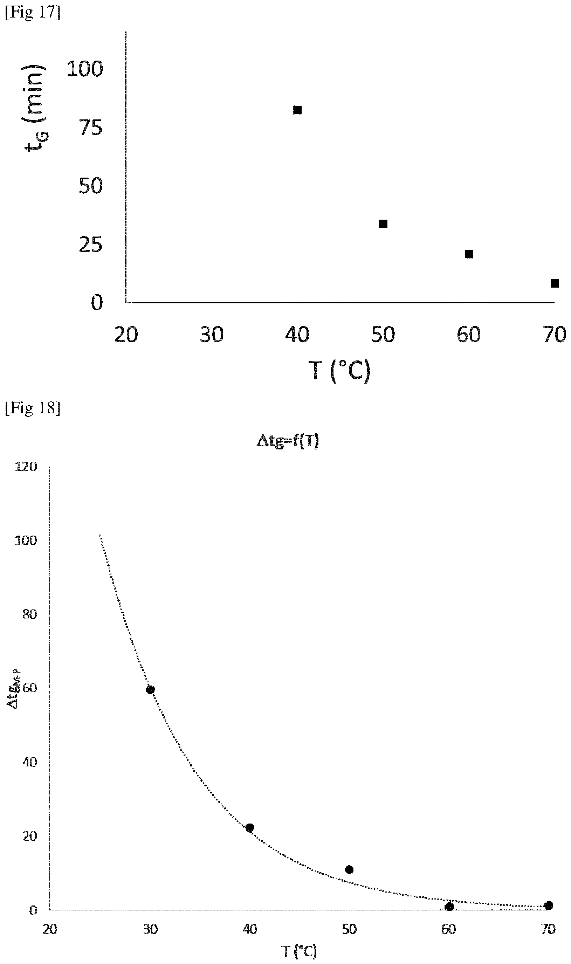

Les courbes des figures 17 et 18 sont obtenues avec la même procédure que celles de l'exemple 4 mais avec un sol différent, et sur une plus grande gamme de températures. Pour obtenir une solution de tétraméthylorthosilicate (TMOS), un premier mélange est réalisé à température ambiante (20°C) avec du TMOS et de l'eau, en solvant méthanol. Les proportions molaires de TMOS, méthanol et eau sont respectivement (1 :2 :4). On chauffe le mélange à 70°C pendant 10 min, puis on y ajoute de l'eau de manière à obtenir des proportions molaires respectives finales (1 :2 :9) avant de procéder à une agitation vigoureuse. Des microbilles fluorescentes 50 sont ajoutées au sol du dispositif microfluidique préparé avant injection dans le microsystème fluidique préalablement rempli d'huile fluorée. La solution de sol est répartie dans les pièges capillaires par la méthode de cassage précédemment décrite. Le microsystème est alors chauffé à une température déterminée T.

Le temps de gel est déterminé par l'observation du mouvement des billes. Cette observation a été faite à différentes températures comme l'illustre la figure 17 représentant le temps de gel t_{G} mesuré statistiquement dans le dispositif microfluidique en fonction de la température T. Le sol tel que défini dans cet exemple peut être utilisé dans le dispositif microfluidique jusqu'à 70°C.

La figure 18 montre une courbe représentant la relation mathématique qui permet de passer du dispositif microfluidique selon l'invention à un tube classique pour la matrice sol-gel étudiée.

Comme cela ressort clairement des exemples 4 et 5, il est alors possible de prédire les temps de gels pour un procédé sol-gel à l'échelle macroscopique grâce à l'étude des microgouttes mettant en oeuvre le même procédé sol-gel. Ceci permet de mesurer très rapidement différents temps de gel dans un dispositif microfluidique selon l'invention sans avoir à faire les expériences macroscopiques et par conséquent gagner du temps, automatiser la mesure, et consommer moins de réactifs.

## Revendications

1. Dispositif microfluidique (1) comportant :
- au moins un piège capillaire (12), et
- au moins une microgoutte (15), la microgoutte (15) étant piégée dans le piège capillaire (12), **caractérisé en ce que** la au moins une microgoutte comporte une matrice sol-gel, notamment à l'état de gel ou de solide après l'étape de synérèse et/ou de séchage du procédé sol-gel.

2. Dispositif selon la revendication 1, comportant une pluralité de pièges capillaires (12), notamment un nombre de pièges capillaires (12) supérieur ou égal à 10, mieux supérieur ou égal à 100, de préférence compris entre 100 et 1000, espacés les uns des autres et une pluralité de microgouttes (15) comportant chacune une matrice sol-gel, les microgouttes (15) étant chacune piégée dans un des pièges capillaires (12).

3. Dispositif selon l'une quelconque des revendications précédentes, dans lequel le ou les pièges capillaires (12) forment chacun une cavité dans une paroi (4, 6) du dispositif microfluidique (1), la hauteur H en bordure du ou des pièges capillaires (12), correspondant à la distance entre la paroi (4, 6) dans laquelle la cavité est formée et la paroi opposée (4, 6) en bordure du piège capillaire (12), étant de préférence inférieure ou égale à la plus petite dimension de la ou de chaque microgoutte (15) piégée comportant une matrice sol-gel, notamment à la plus petite dimension de la ou de chaque microgoutte (15) piégée après l'étape de synérèse du procédé sol-gel de la matrice sol-gel.

4. Dispositif selon l'une quelconque des revendications précédentes, dans lequel le dispositif (1) comporte une unique microgoutte (15) comportant une matrice sol-gel dans le ou chaque piège capillaire (12) ou une pluralité de microgouttes, notamment comportant une matrice sol-gel sensiblement identique, comportant une matrice sol-gel dans le ou chaque piège capillaire, les microgouttes comportant une matrice sol-gel étant notamment agencées dans le piège capillaire en colonne.

5. Dispositif selon l'une quelconque des revendications précédentes, dans lequel la ou les microgouttes (15) comportent chacune un ou plusieurs capteurs moléculaires dans la matrice sol-gel, notamment deux capteurs moléculaires différents permettant la détection d'analytes cibles différents, configurés chacun pour détecter la présence d'un analyte cible, le ou chaque capteur moléculaire étant notamment configuré pour avoir une propriété optique, notamment une couleur, une absorbance, une réflectance, une fluorescence ou une luminescence, qui est différente en présence de l'analyte cible, notamment par réaction ou liaison avec ce dernier.

6. Dispositif selon la revendication 5, dans lequel au moins deux microgouttes (15) comportent des capteurs moléculaires différents pour détecter des analytes cibles différents ou des concentrations différentes en au moins un capteur moléculaire.

7. Procédé de fabrication d'un dispositif microfluidique (1), notamment du dispositif microfluidique selon l'une quelconque des revendications précédentes, le procédé comportant le piégeage d'au moins une microgoutte (15) comportant un sol dans un piège capillaire (12) du dispositif microfluidique, mieux d'une pluralité de microgouttes (15) comportant un sol dans un ou plusieurs piège capillaire (12) du dispositif microfluidique, et la formation d'une matrice sol gel dans la ou chaque microgoutte (15) à partir du sol par un procédé sol-gel et optionnellement l'ajout d'un ou plusieurs capteurs moléculaires dans la ou les microgouttes avant ou après formation de la matrice sol-gel, de préférence avant l'étape de synérèse, chaque capteur moléculaire permettant la détection d'au moins un analyte cible.

8. Procédé selon la revendication 7, dans lequel le piégeage d'une ou des microgouttes (15) comportant chacune un sol dans le ou les pièges capillaires (12) comporte :
(i) le piégeage d'une première microgoutte comportant une partie du sol dans le ou chaque piège capillaire,
(ii) n ajouts successifs d'une ou plusieurs microgouttes complémentaires comportant une autre partie du sol dans le dispositif microfluidique, notamment de l'eau, pour le ou les piéger dans le ou chaque piège capillaire (12), n étant un entier de préférence compris entre 1 et 10, et la coalescence de la première microgoutte et de la ou des microgouttes complémentaires dans chaque piège capillaire (12) pour obtenir la microgoutte (15) comportant le sol, la coalescence ayant lieu après chaque ajout successif ou après l'ensemble des ajouts successifs,
(iii) optionnellement l'ajout de microgouttes additionnelles comportant un ou de plusieurs capteurs moléculaires dans le dispositif microfluidique, leur piégeage dans le ou les pièges capillaires (12) et la coalescence des microgouttes additionnelles et de microgoutte dans le ou chaque piège capillaire, l'étape (iii) ayant lieu avant ou après l'étape (ii).

9. Procédé selon l'une quelconque des revendications 7 ou 8, comportant une étape préalable de formation de la ou des microgouttes (15) comportant le sol ou de la ou des premières microgouttes comportant une partie du sol avant l'étape de piégeage dans les pièges capillaires.

10. Procédé selon l'une quelconque des revendications 7 à 9, dans lequel le piégeage de la ou des microgouttes (15) comportant le sol ou de la ou des première microgoutte comportant une partie du sol comporte:
- le remplissage du dispositif microfluidique (1) d'une première solution (42) comportant le sol ou la partie de sol et optionnellement un ou plusieurs capteurs moléculaires dans le sol,
- l'injection d'une deuxième solution (44) en amont du ou des pièges capillaires (12) pour pousser la première solution vers une sortie du dispositif microfluidique (1) en aval du ou des pièges capillaires, le dispositif microfluidique (1) étant conformé pour permettre la formation d'une microgoutte de la première solution (42) au niveau du ou de chaque piège capillaire (12) lors de l'injection de la deuxième solution dans le dispositif microfluidique (1).

11. Procédé selon l'une quelconque des revendications 7 à 10, comportant le contrôle de la température du dispositif microfluidique (1) durant le procédé, notamment une baisse de la température du dispositif microfluidique durant le piégeage des microgouttes (15) comportant le sol et une augmentation de la température du dispositif microfluidique durant la formation de la matrice sol-gel.

12. Procédé selon l'une quelconque des revendications 7 à 11, comportant la synérèse, notamment le contrôle de la formation de la matrice sol-gel, en particulier de l'étape de synérèse et de séchage, par évaporation du solvant contenu dans la matrice sol-gel au travers d'une surface poreuse au gaz du dispositif microfluidique (1) ou par la circulation d'un fluide dans le dispositif microfluidique (1) entre au moins un canal d'entrée (30) en amont des pièges capillaire et au moins un canal de sortie (34) en aval des pièges capillaires (12).

13. Procédé de détection et/ou de piégeage d'un ou plusieurs analytes dans un fluide à tester, notamment un liquide ou un gaz, à l'aide du dispositif microfluidique (1) selon l'une quelconque des revendications 1 à 6 ou fabriqué par le procédé selon l'une quelconque des revendications 7 à 11, la ou les microgouttes (15) piégées dans le ou les pièges capillaires comportant dans la matrice sol-gel chacune un ou plusieurs capteurs moléculaires configurés pour détecter et/ou piéger un ou plusieurs analytes cibles, le procédé comportant l'exposition de la ou des microgouttes (15) piégées dans le dispositif microfluidique à un fluide à tester et la détection et/ou le piégeage du ou des analytes cibles dans le fluide à tester, le fluide étant de préférence
- un gaz, notamment l'air ambiant, et l'exposition de la ou des microgouttes se fait au travers d'une paroi poreuse au gaz du dispositif microfluidique (1) ou par la circulation du gaz dans le dispositif microfluidique (12) d'un canal d'entrée (30) du dispositif microfluidique en amont du ou des pièges capillaires (12) à un canal de sortie (34) du dispositif microfluidique en aval du ou des pièges capillaires (12) à l'aide d'un système microfluidique, notamment une pompe, un pousse seringue ou un différentiel de pression ou
- un liquide introduit dans le dispositif microfluidique (1) jusqu'à former un front de liquide à proximité de la ou des microgouttes (15), notamment le long d'une marche (40) dans le dispositif microfluidique (1), la ou les microgouttes (15) n'étant pas au contact du liquide, les microgouttes (15) étant exposées à un gaz formé par évaporation du liquide dans le dispositif microfluidique (1) à partir du front de liquide.

14. Procédé selon la revendication 13, comportant la détermination de la concentration à laquelle est exposée la ou chaque microgoutte (15) du dispositif microfluidique en au moins un analyte cible dans le fluide à tester, notamment par l'intensité de la propriété optique mesurée, notamment une intensité de couleur de fluorescence ou de luminescence.

15. Procédé d'évaluation d'une matrice sol-gel dans un dispositif microfluidique (1) selon l'une quelconque des revendications 1 à 6 ou fabriqué par le procédé selon l'une quelconque des revendications 7 à 11, la ou les microgouttes (15) piégées dans les pièges capillaires (12) comportant ladite matrice sol-gel, le procédé comportant l'observation de la formation de la matrice sol-gel, de la synérèse de la matrice sol-gel ou du séchage en temps réel, le procédé comportant notamment l'évaluation du temps de gel du sol lors de la formation de la matrice sol-gel dans la microgoutte (15), notamment pour en déduire le temps de gel du matériau sol-gel dans des volumes macroscopiques, ou l'observation du diamètre de la microgoutte en temps réel lors de l'étape de formation du gel, de synérèse et de séchage.

## Patentansprüche

1. Mikrofluidische Vorrichtung (1), umfassend:
- mindestens eine Kapillarfalle (12) und
- mindestens einen Mikrotropfen (15),
wobei der Mikrotropfen (15) in der Kapillarfalle (12) gefangen wird, **dadurch gekennzeichnet, dass** der mindestens eine Mikrotropfen eine Sol-Gel-Matrix umfasst, insbesondere im Gel- oder Feststoffzustand nach dem Synärese- und/oder Trocknungsschritt des Sol-Gel-Verfahrens.

2. Vorrichtung nach Anspruch 1, umfassend eine Mehrzahl von Kapillarfallen (12), insbesondere eine Anzahl von Kapillarfallen (12) größer als oder gleich 10, besser größer als oder gleich 100, bevorzugt zwischen 100 und 1000, die voneinander beabstandet sind, und eine Mehrzahl von Mikrotropfen (15), die jeweils eine Sol-Gel-Matrix umfassen, wobei die Mikrotropfen (15) jeweils in einer der Kapillarfallen (12) gefangen werden.

3. Vorrichtung nach einem der vorhergehenden Ansprüche, bei der die Kapillarfalle oder -fallen (12) jeweils einen Hohlraum in einer Wand (4, 6) der mikrofluidischen Vorrichtung (1) bilden, wobei die Höhe H am Rand der Kapillarfalle oder -fallen (12), die dem Abstand zwischen der Wand (4, 6), in welcher der Hohlraum gebildet ist, und der entgegengesetzten Wand (4, 6) am Rand der Kapillarfalle (12) entspricht, bevorzugt kleiner als oder gleich dem kleinsten Maß des oder jedes gefangenen Mikrotropfens (15) ist, der eine Sol-Gel-Matrix umfasst, insbesondere dem kleinsten Maß des oder jedes gefangenen Mikrotropfens (15) nach dem Synäreseschritt des Sol-Gel-Verfahrens der Sol-Gel-Matrix.

4. Vorrichtung nach einem der vorhergehenden Ansprüche, bei der die Vorrichtung (1) einen einzigen Mikrotropfen (15), der eine Sol-Gel-Matrix umfasst, in der oder jeder Kapillarfalle (12) oder eine Mehrzahl von Mikrotropfen, die insbesondere eine im Wesentlichen identische Sol-Gel-Matrix umfassen, die eine Sol-Gel-Matrix umfassen, in der oder jeder Kapillarfalle umfasst, wobei die Mikrotropfen, die eine Sol-Gel-Matrix umfassen, in der Kapillarfalle insbesondere in einer Kolonne angeordnet sind.

5. Vorrichtung nach einem der vorhergehenden Ansprüche, bei welcher der oder die Mikrotropfen (15) jeweils einen oder mehrere molekulare Sensoren in der Sol-Gel-Matrix umfassen, insbesondere zwei verschiedene molekulare Sensoren, die den Nachweis verschiedener Zielanalyen ermöglichen und jeweils dazu ausgestaltet sind, das Vorkommen eines Zielanalyten nachzuweisen, wobei der oder jeder molekulare Sensor insbesondere dazu ausgestaltet ist, eine optische Eigenschaft zu haben, insbesondere eine Farbe, einen Absorptionsgrad, eine Reflektanz, eine Fluoreszenz oder eine Lumineszenz, die bei Vorkommen des Zielanalyten verschieden ist, insbesondere durch Reagieren oder Verbinden mit Letzterem.

6. Vorrichtung nach Anspruch 5, bei der mindestens zwei Mikrotropfen (15) verschiedene molekulare Sensoren, um verschiedene Zielanalyten nachzuweisen, oder verschiedene Konzentrationen in mindestens einem molekularen Sensor umfassen.

7. Verfahren zur Herstellung einer mikrofluidischen Vorrichtung (1), insbesondere der mikrofluidischen Vorrichtung nach einem der vorhergehenden Ansprüche, wobei das Verfahren das Fangen mindestens eines Mikrotropfens (15), der ein Sol umfasst, in einer Kapillarfalle (12) der mikrofluidischen Vorrichtung umfasst, besser einer Mehrzahl von Mikrotropfen (15), die ein Sol umfassen, in einer oder mehreren Kapillarfallen (12) der mikrofluidischen Vorrichtung, und das Bilden einer Sol-Gel-Matrix in dem oder jedem Mikrotropfen (15) ausgehend von dem Sol durch ein Sol-Gel-Verfahren und optional die Zugabe eines oder mehrerer molekularer Sensoren in den oder die Mikrotropfen vor oder nach dem Bilden der Sol-Gel-Matrix, bevorzugt vor dem Synäreseschritt, wobei jeder molekulare Sensor das Nachweisen mindestens eines Zielanalyten ermöglicht.

8. Verfahren nach Anspruch 7, bei dem das Fangen eines oder der Mikrotropfen (15), die jeweils ein Sol umfassen, in der oder den Kapillarfallen (12) umfasst:
(i) das Fangen eines ersten Mikrotropfens, der einen Teil des Sols umfasst, in der oder jeder Kapillarfalle,
(ii) n sukzessive Zugaben eines oder mehrerer komplementärer Mikrotropfen, die einen anderen Teil des Sols umfassen, in die mikrofluidische Vorrichtung, insbesondere Wasser, um ihn oder sie in der oder jeder Kapillarfalle (12) zu fangen, wobei n eine ganze Zahl bevorzugt zwischen 1 und 10 ist, und die Koaleszenz des ersten Mikrotropfens und des oder der komplementären Mikrotropfen in jeder Kapillarfalle (12), um den Mikrotropfen (15), der das Sol umfasst, zu erhalten, wobei die Koaleszenz nach jeder sukzessiven Zugabe oder nach der Gesamtheit der sukzessiven Zugaben stattfindet,
(iii) optional die Zugabe von zusätzlichen Mikrotropfen, die ein oder mehrere molekulare Sensoren umfassen, in die mikrofluidische Vorrichtung, ihr Fangen in der oder den Kapillarfallen (12) und die Koaleszenz der zusätzlichen Mikrotropfen und des Mikrotropfens in der oder jeder Kapillarfalle, wobei der Schritt (iii) vor oder nach dem Schritt (ii) stattfindet.

9. Verfahren nach einem der Ansprüche 7 oder 8, umfassend einen vorherigen Schritt des Bildens des oder der Mikrotropfen (15), die das Sol umfassen, oder des oder der ersten Mikrotropfen, die einen Teil des Sols umfassen, vor dem Schritt des Fangens in den Kapillarfallen.

10. Verfahren nach einem der Ansprüche 7 bis 9, bei dem das Fangen des oder der Mikrotropfen (15), die das Sol umfassen, oder des oder der ersten Mikrotropfen, die einen Teil des Sols umfassen, umfasst:
- das Befüllen der mikrofluidischen Vorrichtung (1) mit einer ersten Lösung (42), die das Sol oder den Teil des Sols und optional einen oder mehrere molekulare Sensoren in dem Sol umfasst,
- das Einspritzen einer zweiten Lösung (44) stromauf der Kapillarfalle oder -fallen (12), um die erste Lösung hin zu einem Auslass der mikrofluidischen Vorrichtung (1) stromab der Kapillarfalle oder -fallen zu drängen, wobei die mikrofluidische Vorrichtung (1) dazu ausgebildet ist, das Bilden eines Mikrotropfens der ersten Lösung (42) an der oder jeder Kapillarfalle (12) beim Einspritzen der zweiten Lösung in die mikrofluidische Vorrichtung (1) zu ermöglichen.

11. Verfahren nach einem der Ansprüche 7 bis 10, umfassend die Überwachung der Temperatur der mikrofluidischen Vorrichtung (1) während des Verfahrens, insbesondere ein Absinken der Temperatur der mikrofluidischen Vorrichtung während des Fangens der Mikrotropfen (15), die das Sol umfassen, und ein Ansteigen der Temperatur der mikrofluidischen Vorrichtung während des Bildens der Sol-Gel-Matrix.

12. Verfahren nach einem der Ansprüche 7 bis 11, umfassend die Synärese, insbesondere die Überwachung des Bildens der Sol-Gel-Matrix, insbesondere des Synärese- und Trocknungsschritts, durch Verdampfen des in der Sol-Gel-Matrix enthaltenen Lösungsmittels durch eine gasporöse Fläche der mikrofluidischen Vorrichtung (1) hindurch oder durch die Zirkulation eines Fluids in der mikrofluidischen Vorrichtung (1) zwischen mindestens einem Einlasskanal (30) stromauf der Kapillarfallen und mindestens einem Auslasskanal (34) stromab der Kapillarfallen (12).

13. Verfahren zum Nachweisen und/oder zum Fangen eines oder mehrerer Analyten in einem zu testenden Fluid, insbesondere einer Flüssigkeit oder einem Gas, mithilfe der mikrofluidischen Vorrichtung (1) nach einem der Ansprüche 1 bis 6 oder der mit dem Verfahren nach einem der Ansprüche 7 bis 11 hergestellten mikrofluidischen Vorrichtung, wobei der oder die in der oder den Kapillarfallen gefangenen Mikrotropfen (15) in der Sol-Gel-Matrix jeweils einen oder mehrere molekulare Sensoren umfassen, die dazu ausgestaltet sind, ein oder mehrere Zielanalyten nachzuweisen und/oder zu fangen, wobei das Verfahren das Aussetzen des oder der in der mikrofluidischen Vorrichtung (15) gefangenen Mikrotropfen gegenüber einem zu testenden Fluid und das Nachweisen und/oder Fangen des oder der Zielanalyten in dem zu testenden Fluid umfasst, wobei das Fluid bevorzugt
- ein Gas ist, insbesondere die Umgebungsluft, und das Aussetzen des oder der Mikrotropfen durch eine gasporöse Wand der mikrofluidischen Vorrichtung (1) hindurch oder durch die Zirkulation des Gases in der mikrofluidischen Vorrichtung (12) von einem Einlasskanal (30) der mikrofluidischen Vorrichtung stromauf der Kapillarfalle oder -fallen (12) zu einem Auslasskanal (34) der mikrofluidischen Vorrichtung stromab der Kapillarfalle oder -fallen (12) mithilfe eines mikrofluidischen Systems erfolgt, insbesondere einer Pumpe, einer Spritzenpumpe oder einer Druckdifferenz, oder
- eine Flüssigkeit ist, die in die mikrofluidische Vorrichtung (1) eingeführt wird, bis eine Flüssigkeitsfront in der Nähe des oder der Mikrotropfen (15) gebildet wird, insbesondere entlang einer Stufe (40) in der mikrofluidischen Vorrichtung (1), wobei der oder die Mikrotropfen (15) nicht in Kontakt mit der Flüssigkeit sind, wobei die Mikrotropfen (15) einem Gas ausgesetzt sind, das durch Verdampfen der Flüssigkeit in der mikrofluidischen Vorrichtung (1) ausgehend von der Flüssigkeitsfront gebildet wird.

14. Verfahren nach Anspruch 13, umfassend die Ermittlung der Konzentration, welcher der oder jeder Mikrotropfen (15) der mikrofluidischen Vorrichtung ausgesetzt ist, an mindestens einem Zielanalysten in dem zu testenden Fluid, insbesondere durch die Intensität der gemessenen optischen Eigenschaft, insbesondere eine Intensität der Farbe, der Fluoreszenz oder der Lumineszenz.

15. Verfahren zum Bewerten einer Sol-Gel-Matrix in einer mikrofluidischen Vorrichtung (1) nach einem der Ansprüche 1 bis 6 oder einer nach dem Verfahren nach einem der Ansprüche 7 bis 11 hergestellten mikrofluidischen Vorrichtung, wobei der oder die in den Kapillarfallen (12) gefangenen Mikrotropfen (15) die Sol-Gel-Matrix umfassen, wobei das Verfahren das Beobachten des Bildens der Sol-Gel-Matrix, der Synärese der Sol-Gel-Matrix oder des Trocknens in Echtzeit umfasst, wobei das Verfahren insbesondere das Bewerten der Gelzeit des Sols beim Bilden der Sol-Gel-Matrix in dem Mikrotropfen (15) umfasst, insbesondere, um daraus die Gelzeit des Sol-Gel-Materials in makroskopischen Volumina abzuleiten, oder das Beobachten des Durchmessers des Mikrotropfens in Echtzeit beim Gelbildungs-, Synärese- und Trocknungsschritt.

## Claims

1. Microfluidic device (1) including:
- at least one capillary trap (12), and
- at least one microdrop (15),
the microdrop (15) being trapped in the capillary trap (12), **characterized in that** the at least one microdrop includes a sol-gel matrix, notably in the form of a gel or a solid after the syneresis and/or drying step of the sol-gel process.

2. Device according to Claim 1, including a plurality of spaced-apart capillary traps (12), notably a number of capillary traps (12) greater than or equal to 10, better still greater than or equal to 100, preferably between 100 and 1000, and a plurality of microdrops (15) each including a sol-gel matrix, the microdrops (15) each being trapped in one of the capillary traps (12).

3. Device according to either of the preceding claims, in which the capillary trap(s) (12) each form a cavity in a wall (4, 6) of the microfluidic device (1), the height H at the edge of the capillary trap(s) (12), corresponding to the distance between the wall (4, 6) in which the cavity is formed and the opposite wall (4, 6) at the edge of the capillary trap (12), preferably being less than or equal to the smallest dimension of the or of each trapped microdrop (15) including a sol-gel matrix, notably less than or equal to the smallest dimension of the or of each trapped microdrop (15) after the syneresis step of the sol-gel process of the sol-gel matrix.

4. Device according to any one of the preceding claims, in which the device (1) includes only one microdrop (15) including a sol-gel matrix in the or each capillary trap (12) or a plurality of microdrops, notably including a substantially identical sol-gel matrix, including a sol-gel matrix in the or each capillary trap, the microdrops including a sol-gel matrix notably being arranged in the capillary trap in a column.

5. Device according to any one of the preceding claims, in which the microdrop(s) (15) each include one or more molecular sensors in the sol-gel matrix, notably two different molecular sensors for detecting different target analytes, which are each configured to detect for the presence of a target analyte, the or each molecular sensor notably being configured to have an optical property, notably a colour, an absorbance, a reflectance, a fluorescence or a luminescence, which is different in the presence of the target analyte, notably by reaction or bonding therewith.

6. Device according to Claim 5, in which at least two microdrop(s) (15) include different molecular sensors for detecting different target analytes or different concentrations of at least one molecular sensor.

7. Process for manufacturing a microfluidic device (1), notably the microfluidic device according to any one of the preceding claims, the process including the trapping of at least one microdrop (15) including a sol in a capillary trap (12) of the microfluidic device, better still a plurality of microdrops (15) including a sol in one or more capillary traps (12) of the microfluidic device, and the formation of a sol-gel matrix in the or each microdrop (15) using the sol via a sol-gel process and optionally the addition of one or more molecular sensors to the microdrop(s) before or after formation of the sol-gel matrix, preferably before the syneresis step, each molecular sensor enabling the detection of at least one target analyte.

8. Process according to Claim 7, in which the trapping of one or more microdrops (15) each including a sol in the capillary trap(s) (12) includes:
(i) the trapping of a first microdrop including a portion of the sol in the or each capillary trap,
(ii) n successive additions of one or more additional microdrops including another portion of the sol to the microfluidic device, notably water, to trap it (them) in the or each capillary trap (12), n being an integer preferably between 1 and 10, and the coalescence of the first microdrop and of the additional microdrop(s) in each capillary trap (12) to obtain the microdrop (15) including the sol, the coalescence taking place after each successive addition or after all of the successive additions,
(iii) optionally the addition of additional microdrops including one or more molecular sensors to the microfluidic device, the trapping of said additional microdrop(s) in the capillary trap(s) (12) and the coalescence of the additional microdrops and of the microdrop in the or each capillary trap, step (iii) taking place before or after step (ii).

9. Process according to either of Claims 7 and 8, including a prior step of forming the microdrop(s) (15) including the sol or the first microdrop(s) including a portion of the sol before the step of trapping in the capillary traps.

10. Process according to any one of Claims 7 to 9, in which the trapping of the microdrop(s) (15) including the sol or of the first microdrop(s) including a portion of the sol includes:
- the filling of the microfluidic device (1) with a first solution (42) including the sol or the sol portion and optionally one or more molecular sensors in the sol,
- the injection of a second solution (44) upstream of the capillary trap(s) (12) to push the first solution towards an outlet of the microfluidic device (1) downstream of the capillary trap(s), the microfluidic device (1) being configured to enable the formation of a microdrop of the first solution (42) in the or each capillary trap (12) during the injection of the second solution into the microfluidic device (1).

11. Process according to any one of Claims 7 to 10, including control of the temperature of the microfluidic device (1) during the process, notably lowering of the temperature of the microfluidic device during the trapping of the microdrops (15) including the sol and raising of the temperature of the microfluidic device during the formation of the sol-gel matrix.

12. Process according to any one of Claims 7 to 11, including syneresis, notably control of the formation of the sol-gel matrix, in particular of the syneresis and drying step, by evaporation of the solvent contained in the sol-gel matrix through a gas-porous surface of the microfluidic device (1) or by circulation of a fluid in the microfluidic device (1) between at least one inlet channel (30) upstream of the capillary traps and at least one outlet channel (34) downstream of the capillary traps (12).

13. Process for detecting and/or trapping one or more analytes in a fluid to be tested, notably a liquid or a gas, using the microfluidic device (1) according to any one of Claims 1 to 6 or manufactured via the process according to any one of Claims 7 to 11, the microdrop(s) (15) trapped in the capillary trap(s) each including in the sol-gel matrix one or more molecular sensors configured to detect and/or trap one or more target analytes, the process including the exposure of the microdrop(s) (15) trapped in the microfluidic device to a fluid to be tested and the detection and/or trapping of the target analyte(s) in the fluid to be tested, the fluid preferably being
- a gas, notably ambient air, and the exposure of the microdrop(s) takes place through a gas-porous wall of the microfluidic device (1) or by circulation of the gas in the microfluidic device (12) from an inlet channel (30) of the microfluidic device upstream of the capillary trap(s) (12) to an outlet channel (34) of the microfluidic device downstream of the capillary trap(s) (12) by means of a microfluidic system, notably a pump, a syringe pump or a pressure differential, or
- a liquid introduced into the microfluidic device (1) until a liquid front forms in the vicinity of the microdrop(s) (15), notably along a step (40) in the microfluidic device (1), the microdrop(s) (15) not being in contact with the liquid, the microdrops (15) being exposed to a gas formed by evaporation of the liquid in the microfluidic device (1) from the liquid front.

14. Process according to Claim 13, including the determination of the concentration, to which is exposed the or each microdrop (15) of the microfluidic device, of at least one target analyte in the fluid to be tested, notably via the intensity of the optical property measured, notably a colour, fluorescence or luminescence intensity.

15. Process for evaluating a sol-gel matrix in a microfluidic device (1) according to any one of Claims 1 to 6 or manufactured via the process according to any one of Claims 7 to 11, the microdrop (s) (15) trapped in the capillary traps (12) including said sol-gel matrix, the process including the observation of formation of the sol-gel matrix, of syneresis of the sol-gel matrix or of the real-time drying, the process notably including evaluation of the gel time of the sol during the formation of the sol-gel matrix in the microdrop (15) notably to deduce therefrom the gel time of the sol-gel material in macroscopic volumes, or real-time observation of the diameter of the microdrop during the step of formation of the gel, syneresis and drying.
